# EUROPEAN PATENT APPLICATION

(11) **EP 4 750 151 A1**
(43) Date of publication of application: **27.05.2026**
(21) Application number: 24850697.4
(22) Date of filing: 25.06.2024
(51) Int. Cl.: H04W 36/00

(54) **COMMUNICATION METHOD AND APPARATUS**

(30) Priority: 09.08.2023 CN 202311005283
(71) Applicant: HUAWEI TECHNOLOGIES CO., LTD., Shenzhen 518129 (CN)
(72) Inventor: KUANG, Yiru, Shenzhen, Guangdong 518129 (CN); XU, Haibo, Shenzhen, Guangdong 518129 (CN)
(74) Representative: Maiwald GmbH
(86) International application number: PCT/CN2024/101318
(87) International publication number: WO 2025/031046

(57) **Abstract**

This application discloses a communication method and apparatus, and may be applied to a multi-SIM terminal. The method includes: A network device sends first information and second information to a terminal device, where the first information indicates the terminal device to report a measurement gap requirement, the second information is for enabling the terminal device to report a temporary capability by using UAI, and the temporary capability includes the measurement gap requirement. When the terminal device has not reported the measurement gap requirement, or a first measurement gap requirement is different from a last reported measurement gap requirement, the terminal device sends the first measurement gap requirement to the network device, where the first measurement gap requirement is a current measurement gap requirement of the terminal device. According to the method, a network side can obtain the current measurement gap requirement of the terminal device, to configure an appropriate related parameter for the terminal device, and ensure normal communication between the terminal device and the network device. In addition, repeated reporting of the measurement gap requirement can further be reduced, to improve system resource utilization.

## Description

### CROSS-REFERENCE TO RELATED APPLICATIONS

This application claims priority to Chinese Patent Application No. 202311005283.4, filed with the China National Intellectual Property Administration on August 9, 2023 and entitled "COMMUNICATION METHOD AND APPARATUS", which is incorporated herein by reference in its entirety.

### TECHNICAL FIELD

Embodiments of this application relate to the field of measurement reporting technologies, and in particular, to a communication method and apparatus.

### BACKGROUND

A terminal device may report a measurement gap requirement based on a radio resource control (radio resource control, RRC) message, or may report the measurement gap requirement based on a temporary capability update mechanism. When the terminal device reports the measurement gap requirement based on the RRC message, and reports the measurement gap requirement based on the temporary capability update mechanism, a network side may be incapable of determining a current latest measurement gap requirement of the terminal device, affecting normal communication of the terminal device.

### SUMMARY

Embodiments of this application provide a communication method and apparatus, so that a network side can determine a latest measurement gap requirement of a terminal device.

To achieve the foregoing objective, the following technical solutions are used in embodiments of this application.

According to a first aspect, an embodiment of this application provides a communication method. The method may be performed by a first communication apparatus. The first communication apparatus may be a terminal device, or the first communication apparatus is a component configured to implement a function of a terminal device. For example, the first communication apparatus is a unit/module, a circuit, or a chip in the terminal device. The following describes, by using an example in which the first communication apparatus is the terminal device, the method provided in the first aspect.

The communication method includes: The terminal device receives first information and second information, where the first information indicates the terminal device to report a measurement gap requirement, the second information is for enabling the terminal device to report a temporary capability by using user equipment assistance information (user equipment assistance information, UAI), the temporary capability includes the measurement gap requirement, and the measurement gap requirement indicates whether a measurement gap is required. When the terminal device has not reported the measurement gap requirement, or a first measurement gap requirement is different from a last reported measurement gap requirement, the terminal device sends the first measurement gap requirement, where the first measurement gap requirement is a current measurement gap requirement of the terminal device.

In the method, when the terminal device is configured to: report the measurement gap requirement, and report the temporary capability by using the UAI, the terminal device makes a comparison with the last reported measurement gap requirement. If the current measurement gap requirement is different from the last reported measurement gap requirement, the terminal device reports the current measurement gap requirement. Certainly, if the current measurement gap requirement is a measurement gap requirement to be reported by the terminal device for the first time, the terminal device reports the current measurement gap requirement. According to the method, a network side can determine a latest measurement gap requirement of the terminal device, and then configure a related parameter for the terminal device based on the measurement gap requirement adapted to the terminal device, to ensure normal communication of the terminal device. In addition, according to the method, repeated reporting of the measurement gap requirement can also be avoided, to reduce signaling overheads, and improve resource utilization of a communication system.

In a possible implementation, the first information is carried in an RRC reconfiguration message or an RRC resume message; and the first measurement gap requirement is carried in an RRC reconfiguration complete message, an RRC resume complete message, or a UAI message.

In a possible implementation, the last reported measurement gap requirement is a last reported measurement gap requirement in measurement gap requirements in the RRC reconfiguration complete message and the UAI message; or Alternatively, the last reported measurement gap requirement is a last reported measurement gap requirement in the RRC reconfiguration complete message, the RRC resume complete message, and the UAI message.

When the terminal device is configured to report the temporary capability by using the UAI, the measurement gap requirement reported by the terminal device may be carried in the RRC reconfiguration complete message, or may be carried in the UAI message. In this case, the last reported measurement gap requirement is the last reported measurement gap requirement in the RRC reconfiguration complete message and the UAI message. When the terminal device is configured to report the temporary capability by using the UAI, the measurement gap requirement reported by the terminal device may be carried in the RRC reconfiguration complete message, or may be carried in the RRC resume complete message or the UAI message. In this case, the last reported measurement gap requirement is the last reported measurement gap requirement in the RRC reconfiguration complete message, the RRC resume complete message, and the UAI message.

In a possible implementation, the first information includes filtering information, and the filtering information indicates a target band for which the terminal device is requested to report the measurement gap requirement. Correspondingly, when the first measurement gap requirement is carried in the UAI message, the first measurement gap requirement corresponds to the target band.

The first measurement gap requirement reported by the terminal device by using the UAI message may correspond to the target band indicated by the network device by using the first information. According to this solution, reporting of an unnecessary measurement gap requirement by the terminal device can be reduced, to improve communication efficiency and the resource utilization of the communication system.

In a possible implementation, after sending the first measurement gap requirement, the method further includes: The terminal device starts a timer, where in a running process of the timer, the terminal device is prohibited from reporting the measurement gap requirement by using the UAI message. According to this solution, a case in which the terminal device frequently reports measurement gap requirements by using UAI messages can be avoided, and reporting of the unnecessary measurement gap requirement by the terminal device can be reduced, to improve the resource utilization of the communication system.

In a possible implementation, the terminal device is handed over from a source network device to a target network device, and the terminal device has sent a first UAI message in a first time period before receiving a handover instruction; and the method further includes: The terminal device sends a second UAI message to the target network device, where when the first measurement gap requirement is carried in the first UAI message, the second UAI message includes a second measurement gap requirement, and the second measurement gap requirement is a current measurement gap requirement of the terminal device; or when the first measurement gap requirement is carried in the RRC reconfiguration complete message, second UAI includes no measurement gap requirement.

In a handover scenario, when the terminal device has sent a UAI message (for example, the first UAI message) in the first time period before receiving the handover instruction, and the terminal device has reported the measurement gap requirement to the source network device by using the RRC reconfiguration complete message after being handed over to the target network device, a UAI message (for example, the second UAI message) sent by the terminal device to the target network device again may not include the measurement gap requirement, to reduce repeated reporting of the same measurement gap requirement, thereby improving the communication efficiency, and improving the resource utilization of the communication system.

According to a second aspect, an embodiment of this application provides a communication method. The method may be performed by a first communication apparatus and a second communication apparatus. The first communication apparatus may be a terminal device, or the first communication apparatus is a component configured to implement a function of a terminal device. For example, the first communication apparatus is a unit/module, a circuit, or a chip in the terminal device. The second communication apparatus may be a network device, or the second communication apparatus is a component configured to implement a function of a network device. For example, the second communication apparatus is a unit/module, a circuit, or a chip in the network device. The following describes, by using an example in which the first communication apparatus is the terminal device and the second communication apparatus is the network device, the method provided in the second aspect.

The communication method includes: The network device sends first information to the terminal device, and sends second information to the terminal device, where the first information indicates the terminal device to report a measurement gap requirement, the second information is for enabling the terminal device to report a temporary capability by using a UAI message, the temporary capability includes the measurement gap requirement, and the measurement gap requirement indicates whether a measurement gap is required. When the terminal device has not reported the measurement gap requirement, or a first measurement gap requirement is different from a last reported measurement gap requirement, the terminal device sends the first measurement gap requirement to the network device, where the first measurement gap requirement is a current measurement gap requirement of the terminal device.

In a possible implementation, the first information is carried in an RRC reconfiguration message or an RRC resume message; and the first measurement gap requirement is carried in an RRC reconfiguration complete message, an RRC resume complete message, or the UAI message.

In a possible implementation, the last reported measurement gap requirement is:
a last reported measurement gap requirement in measurement gap requirements included in the RRC reconfiguration complete message and the UAI message; or a last reported measurement gap requirement in measurement gap requirements included in the RRC reconfiguration complete message, the RRC resume complete message, and the UAI message.

According to a third aspect, an embodiment of this application provides a communication method. The method may be performed by a first communication apparatus. The first communication apparatus may be a terminal device, or the first communication apparatus is a component configured to implement a function of a terminal device. For example, the first communication apparatus is a unit/module, a circuit, or a chip in the terminal device. The following describes, by using an example in which the first communication apparatus is the terminal device, the method provided in the second aspect.

The communication method includes: The terminal device sends a first RRC reconfiguration complete message and a first UAI message, where the first RRC reconfiguration complete message includes a first measurement gap requirement, and the first UAI message includes a second measurement gap requirement. When the terminal device is handed over from a source network device to a target network device, the terminal device sends a current measurement gap requirement to the target network device.

In a handover scenario, when being handed over from the source network device to the target network device, the terminal device may report the current measurement gap requirement to the target network device. In this way, the target network device can clearly learn of the current measurement gap requirement of the terminal device, so that a related parameter configured by the target network device for the terminal device based on the measurement gap requirement is appropriate, to ensure normal communication between the terminal device and a network device.

In a possible implementation, the current measurement gap requirement is carried in a second RRC reconfiguration complete message or a second UAI message.

In a possible implementation, the method further includes: When the terminal device initiates transmission of a UAI message in a first time period before receiving a handover instruction, is handed over from the source network device to the target network device, and sends the current measurement gap requirement to the target network device by using the second RRC reconfiguration complete message, the terminal device sends a third UAI message to the target network device, where the third UAI message does not include the current measurement gap requirement.

In this solution, if the terminal device has sent the UAI message (for example, the second UAI message) in the first time period before receiving the handover instruction, and the terminal device has reported the measurement gap requirement to the source network device by using an RRC reconfiguration complete message after being handed over to the target network device, a UAI message (for example, the third UAI message) sent by the terminal device to the target network device again does not include the measurement gap requirement, to reduce repeated reporting of the same measurement gap requirement, thereby reducing signaling overheads.

According to a fourth aspect, an embodiment of this application provides a communication method. The method may be performed by a second communication apparatus. The second communication apparatus may be a network device, or the second communication apparatus is a component configured to implement a function of a network device. For example, the second communication apparatus is a unit/module, a circuit, or a chip in the network device. The following describes, by using an example in which the second communication apparatus is a source network device, the method provided in the fourth aspect.

The communication method includes: The source network device receives a first measurement gap requirement from a terminal device; and receives a second measurement gap requirement from the terminal device, where the second measurement gap requirement is different from the first measurement gap requirement, the second measurement gap requirement is a last reported measurement gap requirement, and a message carrying the second measurement gap requirement is different from a message carrying the first measurement gap requirement. The source network device sends the second measurement gap requirement to a target network device.

In this solution, the second measurement gap requirement sent by the source network device to the target network device is the measurement gap requirement last reported by the terminal device, so that a related parameter configured by the target network device for the terminal device based on the second measurement gap requirement is appropriate, to ensure normal communication of the terminal device.

In a possible implementation, the last reported measurement gap requirement is:
a last reported measurement gap requirement in measurement gap requirements in an RRC reconfiguration complete message and a UAI message; or a last reported measurement gap requirement in measurement gap requirements in an RRC reconfiguration complete message, an RRC resume complete message, and a UAI message.

In a possible implementation, the second measurement gap requirement sent to the target network device is carried in a handover preparation information message, and the handover preparation information message includes first indication information and second indication information; and the first indication information is measurement gap requirement information, and the second indication information is UAI. When the second measurement gap requirement of the terminal device is carried in an RRC message, the first indication information indicates the second measurement gap requirement. When the second measurement gap requirement of the terminal device is carried in the UAI message, the second indication information indicates the second measurement gap requirement.

In this solution, the source network device may determine, based on a message used by the terminal device to report the second measurement gap requirement to the source network device, whether to indicate the second measurement gap requirement based on the first indication information or the second indication information. When the first indication information indicates the second measurement gap requirement, the second indication information does not indicate the second measurement gap requirement. When the second indication information indicates the second measurement gap requirement, the first indication information does not indicate the second measurement gap requirement. According to this solution, the target network device can determine a current latest measurement gap requirement of the terminal device by using the first indication information or the second indication information. In addition, in this solution, a meaning of the handover preparation information message is not required to be redefined, and compatibility is better.

In a possible implementation, the second measurement gap requirement sent to the target network device is carried in a handover preparation information message, and the handover preparation information message includes first indication information and second indication information; and the first indication information or the second indication information indicates the second measurement gap requirement, the first indication information is measurement gap requirement information, and the second indication information is UAI.

In this solution, it may be specified/agreed that the first indication information or the second indication information indicates the second measurement gap requirement. For example, it is stipulated that the first indication information indicates the second measurement gap requirement, and the target network device may learn of a current latest measurement gap requirement of the terminal device by using the first indication information. For example, it is stipulated that the second indication information indicates the second measurement gap requirement, and the target network device may learn of a current latest measurement gap requirement of the terminal device by using the second indication information.

In a possible implementation, the second measurement gap requirement sent to the target network device is carried in a handover preparation information message, and the handover preparation information message includes first indication information and second indication information; and both the first indication information and the second indication information indicate the second measurement gap requirement, the first indication information is measurement gap requirement information, and the second indication information is UAI.

In this solution, it may be specified that both the first indication information and the second indication information indicate the second measurement gap requirement. The target network device may obtain a current latest measurement gap requirement based on the first indication information and the second indication information.

According to a fifth aspect, an embodiment of this application provides a communication method. The method may be performed by a first communication apparatus. The first communication apparatus may be a terminal device, or the first communication apparatus is a component configured to implement a function of a network device. For example, the first communication apparatus is a unit/module, a circuit, or a chip in the terminal device. The following describes, by using an example in which the first communication apparatus is the terminal device, the method provided in the fifth aspect.

The communication method includes: The terminal device generates a medium access control (medium access control, MAC) protocol data unit (protocol data unit, PDU), and sends the MAC PDU, where the MAC PDU includes an RRC resume request message, the MAC PDU further includes a MAC subheader, and the MAC subheader indicates that a capability of the terminal device is restricted.

In this solution, the MAC subheader indicates that the capability of the terminal device is restricted, and a reserved bit of the RRC resume request message is not required to be occupied to indicate that the capability of the terminal device is restricted, so that the reserved bit of the RRC resume request message can be used for another purpose.

In a possible implementation, that the MAC subheader indicates that the capability of the terminal device is restricted includes: The MAC subheader includes a reserved bit, where a value of the reserved bit is a first value, to indicate that the capability of the terminal device is restricted; or the MAC subheader includes a logical channel identifier (logical channel ID, LCID), where a value of the LCID indicates that the capability of the terminal device is restricted.

In a possible implementation, the indication of that the capability of the terminal device is restricted takes effect in an RRC setup process or an RRC resume process.

According to a sixth aspect, an embodiment of this application provides a communication apparatus. The communication apparatus has a function of implementing behavior in the method instance in the first aspect, the third aspect, the fourth aspect, or the fifth aspect. For beneficial effects, refer to the related descriptions of the first aspect to the fifth aspect. Details are not described herein again. For example, the communication apparatus may be the terminal device in the first aspect, the third aspect, the fourth aspect, or the fifth aspect. For another example, the communication apparatus may be an apparatus that can support a terminal device in implementing a function required by the method provided in the first aspect, the third aspect, the fourth aspect, or the fifth aspect. For example, the communication apparatus may be a chip or a chip system in the terminal device.

In a possible design, the communication apparatus includes a baseband apparatus and a radio frequency apparatus.

In a possible design, the communication apparatus includes a corresponding means (means) or module for performing the method in the first aspect, the third aspect, the fourth aspect, or the fifth aspect. For example, the communication apparatus includes a processing unit (sometimes also referred to as a processing module or a processor) and/or a transceiver unit (sometimes also referred to as a transceiver module or a transceiver). The transceiver unit can implement a sending function and a receiving function. When implementing the sending function, the transceiver unit may be referred to as a sending unit (sometimes also referred to as a sending module). When implementing the receiving function, the transceiver unit may be referred to as a receiving unit (sometimes also referred to as a receiving module). The sending unit and the receiving unit may be a same functional unit, the functional unit is referred to as the transceiver unit, and the functional unit can implement the sending function and the receiving function. Alternatively, the sending unit and the receiving unit may be different functional units, and the transceiver unit is a general term for these functional units. These units (modules) may perform corresponding functions in the method example in the first aspect, the third aspect, the fourth aspect, or the fifth aspect. For details, refer to the detailed descriptions in the method example. Details are not described herein.

According to a seventh aspect, an embodiment of this application provides a communication apparatus. The communication apparatus may be the communication apparatus in the sixth aspect in the foregoing embodiment, or may be a chip or a chip system disposed in the communication apparatus in the sixth aspect. The communication apparatus includes a communication interface and a processor, and optionally, further includes a memory. The memory is configured to store a computer program, instructions, or data, and the processor is coupled to the memory and the communication interface. When the processor reads the computer program, the instructions, or the data, the communication apparatus is enabled to perform the methods performed by the terminal device in the foregoing method embodiments. For example, the communication apparatus may be a terminal device or a functional module in the terminal device, for example, a baseband chip and a radio frequency chip. Alternatively, when the processor reads the computer program, the instructions, or the data, the communication apparatus is enabled to perform the methods performed by the network device in the foregoing method embodiments. For example, the communication apparatus may be a network device or a functional module in the network device, for example, a baseband chip and a radio frequency chip.

According to an eighth aspect, an embodiment of this application provides a chip system. The chip system includes a processor, may further include a communication interface, and is configured to implement the method in the first aspect, the third aspect, the fourth aspect, or the fifth aspect. Optionally, the chip system further includes a memory. The memory is configured to store a computer program (which may also be referred to as code or instructions). The processor is configured to: invoke the computer program from the memory, and run the computer program, to enable a device on which the chip system is installed to perform the method in any one of the first aspect and the possible implementations of the first aspect, enable a device on which the chip system is installed to perform the method in any one of the third aspect and the possible implementations of the third aspect, enable a device on which the chip system is installed to perform the method in any one of the fourth aspect and the possible implementations of the fourth aspect, or enable a device on which the chip system is installed to perform the method in any one of the fifth aspect and the possible implementations of the fifth aspect. The chip system may include a chip, or may include the chip and another discrete device.

According to a ninth aspect, an embodiment of this application provides a communication apparatus. The communication apparatus includes an input/output interface and a logic circuit. The input/output interface is configured to input and/or output information. The input/output interface may be an interface circuit, an output circuit, an input circuit, a pin, a related circuit, or the like. The logic circuit is configured to perform the method in the first aspect, the third aspect, the fourth aspect, or the fifth aspect.

In a specific implementation process, the communication apparatus may be a chip, the input circuit may be an input pin, the output circuit may be an output pin, and the logic circuit may be a transistor, a gate circuit, a trigger, various logic circuits, and the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the input/output interface and the logic circuit are not limited in this application.

In an implementation, when the communication apparatus is a wireless communication device, the wireless communication device may be a terminal device like a mobile phone. The interface circuit may be a radio frequency processing chip in the wireless communication device, and a processing circuit may be a baseband processing chip in the wireless communication device.

According to a tenth aspect, an embodiment of this application provides a communication system. The communication system includes a terminal device and a network device. The terminal device is configured to implement functions of the methods in the first aspect to the fifth aspect.

According to an eleventh aspect, an embodiment of this application provides a computer-readable storage medium. The computer-readable storage medium is configured to store a computer program or instructions. When the computer program or the instructions are run, the method in any one of the first aspect and the possible implementations of the first aspect is enabled to be implemented, the method in any one of the third aspect and the possible implementations of the third aspect is enabled to be implemented, the method in any one of the fourth aspect and the possible implementations of the fourth aspect is enabled to be implemented, or the method in any one of the fifth aspect and the possible implementations of the fifth aspect is enabled to be implemented.

According to a twelfth aspect, an embodiment of this application further provides a computer program product including instructions. When the computer program product runs on a computer, the method in any one of the first aspect and the possible implementations of the first aspect is enabled to be implemented, the method in any one of the third aspect and the possible implementations of the third aspect is enabled to be implemented, the method in any one of the fourth aspect and the possible implementations of the fourth aspect is enabled to be implemented, or the method in any one of the fifth aspect and the possible implementations of the fifth aspect is enabled to be implemented.

For beneficial effects of the sixth aspect to the twelfth aspect and the implementations of the sixth aspect to the twelfth aspect, refer to the descriptions of the beneficial effects of any one of the first aspect to the fifth aspect and the possible implementations of the first aspect to the fifth aspect.

### BRIEF DESCRIPTION OF DRAWINGS

FIG. 1 is a diagram of an architecture of a communication system to which an embodiment of this application is applicable;
FIG. 2 is a diagram of two independent procedures in which a terminal device reports measurement gap requirements according to an embodiment of this application;
FIG. 3 is a schematic flowchart of a communication method 300 according to an embodiment of this application;
FIG. 4 is a schematic flowchart of a communication method 400 according to an embodiment of this application;
FIG. 5 is a schematic flowchart of a communication method 500 according to an embodiment of this application;
FIG. 6 is a schematic flowchart of a communication method 600 according to an embodiment of this application;
FIG. 7 is a schematic flowchart of a communication method 700 according to an embodiment of this application;
FIG. 8 is a schematic flowchart of a communication method 800 according to an embodiment of this application;
FIG. 9 is a diagram of a structure of a communication apparatus according to an embodiment of this application; and
FIG. 10 is a diagram of another structure of a communication apparatus according to an embodiment of this application.

### DESCRIPTION OF EMBODIMENTS

According to methods provided in embodiments of this application, a network side can determine a current measurement gap requirement of a terminal device, so that a related parameter configured for the terminal device based on the measurement gap requirement is appropriate, to ensure normal communication of the terminal device. With reference to the accompanying drawings, the following further describes the solutions provided in embodiments of this application.

The technical solutions provided in embodiments of this application may be applied to various wireless communication systems. For example, the methods provided in embodiments of this application may be applied to a communication system related to the 3rd generation partnership project (3rd generation partnership project, 3GPP), for example, a long term evolution (long term evolution, LTE) communication system or a 5th generation (the sixth generation, 5G) mobile communication system, or may be applied to another next-generation mobile communication system, for example, a 6th generation (6G) communication system, or another similar communication system. The another similar communication systems may include wireless fidelity (wireless fidelity, Wi-Fi), vehicle to everything (vehicle to everything, V2X), an internet of things (internet of things, IoT) system, a narrowband internet of things (narrowband internet of things, NB-IoT) system, or the like.

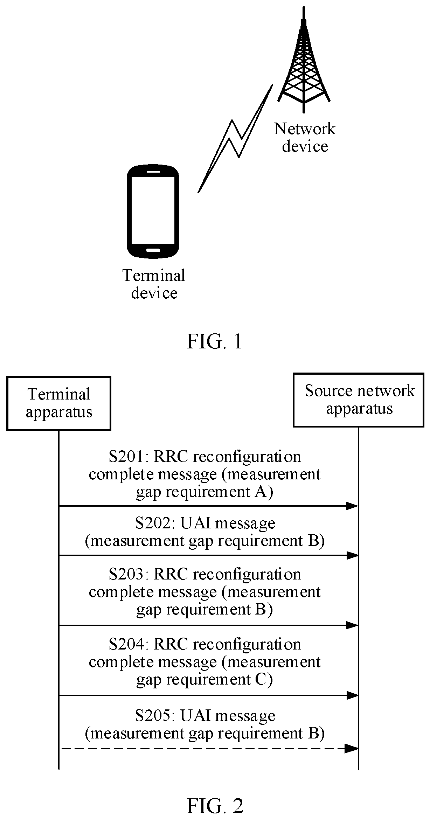

FIG. 1 shows a network architecture of a communication system. The network architecture may include at least one network device and at least one terminal device. In FIG. 1, an example in which the at least one terminal device is one terminal device and the at least one network device is one network device is used. The network device may be an access network device, or the network device includes an access network device and a core network. The network architecture shown in FIG. 1 is merely an example, and there may be fewer or more terminal devices and/or network devices. The communication system described in embodiments of this application is intended to describe the technical solutions in embodiments of this application more clearly, but constitutes no limitation on the communication system to which embodiments of this application are applicable. A person of ordinary skill in the art may know that with evolution of the network architecture, the technical solutions provided in embodiments of this application are also applicable to a similar technical problem. When the technical solutions in embodiments of this application are applied to another communication system, the devices, components, modules, and the like in embodiments may be replaced with corresponding devices, components, and modules in the another communication system. This is not limited.

The network device in embodiments of this application is mainly the access network device. Therefore, in the following descriptions, unless otherwise specified, the "network device" is a radio access network (radio access network, RAN) device, and may be referred to as the access network device for short. A RAN may be a cellular system related to the 3GPP, for example, the 5G mobile communication system, or a future-oriented evolved system (for example, the 6G mobile communication system). Alternatively, a RAN may be an open access network (open RAN, O-RAN, or ORAN), a cloud radio access network (cloud radio access network, CRAN), a virtual radio access network (virtualized RAN, vRAN), or the like. Alternatively, a RAN may be a communication system that integrates two or more of the foregoing systems. The RAN device may also be referred to as a RAN node, a RAN entity, an access node, or the like.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next-generation base station in the 6G mobile communication system, a base station in a future mobile communication system, or the like. The RAN node may be a macro base station, a micro base station, an indoor base station, a relay node, a donor node, a radio controller, or the like. The RAN node may alternatively be a server, a wearable device, a vehicle, a vehicle-mounted device, or the like. For example, a RAN node in a V2X technology may be a road side unit (road side unit, RSU).

In another possible scenario, the RAN node may be a module or unit that completes some functions of a base station; or a plurality of RAN nodes cooperate to assist the terminal device in implementing radio access, and different RAN nodes separately implement some functions of a base station. For example, the RAN node may be a central unit (central unit, CU), a distributed unit (distributed unit, DU), a radio unit (radio unit, RU), or the like. Functions of the CU may be implemented by one entity, or may be implemented by different entities. For example, the functions of the CU may further be divided. That is, a control plane and a user plane are separated, and are implemented by different entities, which are a control plane CU entity (namely, a CU-control plane (control plane, CP) entity) and a user plane CU entity (namely, a CU-user plane (user plane, UP) entity). The CU-CP entity and the CU-UP entity may be coupled to the DU, to jointly complete functions of the RAN node. The CU and the DU may be separately disposed, or may be included in a same network element, for example, a baseband unit (baseband unit, BBU).

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit in the CU (or the CU-CP or the CU-UP), the DU, and the RU in this application may be implemented by using a software module, a hardware module, or a combination of the software module and the hardware module.

The CU and the DU may be configured based on wireless network protocol layer functions implemented by the CU and the DU. For example, the CU is configured to implement functions of a packet data convergence protocol (packet data convergence protocol, PDCP) layer and a protocol layer (for example, a radio resource control (radio resource control, RRC) layer and/or a service data adaptation protocol (service data adaptation protocol, SDAP) layer) above the PDCP layer; and the DU is configured to implement functions of a protocol layer (for example, a radio link control (radio link control, RLC) layer, a MAC layer, and/or a physical (physical, PHY) layer) below the PDCP layer. For another example, the CU is configured to implement functions of a protocol layer (for example, an RRC layer and/or an SDAP layer) above a PDCP layer, and the DU is configured to implement functions of the PDCP layer and a protocol layer (for example, an RLC layer, a MAC layer, and/or a PHY layer) below the PDCP layer. For specific descriptions of the foregoing protocol layers, refer to a related technical specification of the 3GPP or a technical specification of another applicable communication protocol. The division of processing functions of the CU and the DU based on the protocol layers is merely an example. Division may alternatively be performed in another manner. This is not limited in this application. For example, in a design, the CU or the DU may alternatively have some processing functions of a protocol layer through division. In a design, some functions of an RLC layer and functions of a protocol layer above the RLC layer are set on the CU, and remaining functions of the RLC layer and functions of a protocol layer below the RLC layer are set on the DU.

In embodiments of this application, an apparatus configured to implement a function of the network device may be the network device, or may be an apparatus that can support the network device in implementing the function, for example, a chip system or a combined device or component that can implement the function of the network device. The apparatus may be installed in the network device. A specific technology and a specific device form that are used for the network device are not limited in embodiments of this application.

In embodiments of this application, any device that can perform data communication with the base station may be considered as the terminal device. The terminal device is also referred to as a terminal, user equipment (user equipment, UE), a mobile station, a mobile terminal, or the like. The terminal device may be widely used in various scenarios, for example, D2D communication, V2X communication, machine type communication (machine type communication, MTC), an IoT, virtual reality, augmented reality, industrial control, autonomous driving, telemedicine, a smart grid, smart furniture, smart office, smart wearables, smart transportation, or a smart city. For example, the terminal device may be a mobile phone, a computer, a mobile internet device (mobile internet device, MID), a wearable device, a virtual reality (virtual reality, VR) device, an augmented reality (augmented reality, AR) device, a robot arm, a camera, a robot, a smart home device (for example, a television, an air conditioner, a robotic vacuum cleaner, a sound box, or a set-top box), a relay (relay), or customer premises equipment (customer premises equipment, CPE).

If the various terminal devices described above are located in a vehicle (for example, placed/installed in the vehicle), the terminal devices may be all considered as vehicle-mounted terminal devices. The vehicle-mounted terminal device may be an in-vehicle module, an automobile module, an onboard component, an automotive chip, or an on board unit that is disposed in the vehicle as one or more components or units. The vehicle may implement the methods in this application by using the in-vehicle module, the automobile module, the onboard component, the automotive chip, or the on board unit that is disposed in the vehicle. The vehicle-mounted terminal device may be an entire vehicle device, an in-vehicle module, a vehicle, an on board unit (on board unit, OBU), a road side unit (road side unit, RSU), an in-vehicle infotainment system (also referred to as an in-vehicle sending unit) (telematics box, T-box), a chip, a system on a chip (system on a chip, SoC), or the like. The chip or the SoC may be installed in the vehicle, the OBU, the RSU, or the T-box.

In embodiments of this application, an apparatus configured to implement a function of the terminal device may be the terminal device, or may be an apparatus that can support the terminal device in implementing the function, for example, a chip system or a combined device or component that can implement the function of the terminal device. The apparatus may be installed in the terminal device. A specific technology and a specific device form that are used for the terminal device are not limited in embodiments of this application.

The terminal device receives and sends signals through a radio frequency channel. One radio frequency channel usually works on one carrier frequency, or works in one frequency range. When a plurality of radio frequency channels are disposed in the terminal device, the terminal device may adjust one of the radio frequency channels to a carrier frequency of a serving cell, to exchange information with the serving cell. In addition, the terminal device may further adjust another radio frequency channel to a carrier frequency of a neighboring cell, to exchange information with the neighboring cell. When having only one radio frequency channel, the terminal device can receive a signal only on one frequency or in one frequency range at a same moment, and cannot perform service transmission with the serving cell and measure the neighboring cell simultaneously. For example, in a process in which the terminal device receives data sent by the serving cell, if the terminal device is required to measure another cell, a receive antenna or a receive radio frequency channel of the terminal device is required to be switched from a current frequency to a frequency that is required to be measured. To ensure quality of a radio link between the terminal device and a current serving cell, in a specified time period, the terminal device usually is required to stop receiving a signal and data of the serving cell of the terminal device and receive a signal of another cell for measurement. The time period is referred to as a measurement gap, a measurement gap (measurement gap), or a measurement gap. After the time period ends, the terminal device starts to receive the signal and the data of the serving cell. The measurement gap may be aperiodic duration, or may be a plurality of time periods that are periodically distributed.

The measurement gap is configured by the network device for the terminal device. Based on a radio frequency hardware capability of the terminal device, the terminal device may require the measurement gap to measure some intra-frequency frequencies or inter-frequency frequencies, and may not require the measurement gap to measure other intra-frequency frequencies or inter-frequency frequencies. To enable the network device to configure an appropriate measurement gap for the terminal device, the terminal device may report a measurement gap requirement (which may also be referred to as a measurement gap capability) to the network device. The measurement gap requirement may indicate whether the terminal device requires the measurement gap. The measurement gap requirement includes a measurement gap requirement for measuring a target band (target band) by the terminal device. The target band includes one or more bands, and the terminal device reports measurement gap requirements corresponding to the bands, to indicate whether the terminal device requires measurement gaps to measure the bands.

The network device indicates the terminal device to report the measurement gap requirement. That the network device indicates the terminal device to report the measurement gap requirement includes: The network device enables the terminal device to report the measurement gap requirement, the network device indicates, to the terminal device, that reporting of the measurement gap requirement is allowed, or the network device configures the terminal device to report the measurement gap requirement. The terminal device reports the measurement gap requirement to the network device based on the indication of the network device. If the network device configures, by using an RRC reconfiguration (RRC reconfiguration) message, the terminal device to report the measurement gap requirement, correspondingly, the terminal device reports the measurement gap requirement to the network device by using an RRC reconfiguration complete message. For example, the terminal device sends, to the network device, the RRC reconfiguration complete message including the measurement gap requirement. If the network device configures, by using an RRC resume (RRC resume) message, the terminal device to report the measurement gap requirement, correspondingly, the terminal device reports the measurement gap requirement to the network device by using an RRC resume complete message.

Optionally, the terminal device can report the measurement gap requirement to the network device only when the network device enables the terminal device to report the measurement gap requirement, allows the terminal device to report the measurement gap requirement, or configures the terminal device to report the measurement gap requirement. If the network device does not indicate the terminal device to report the measurement gap requirement, the terminal device is not required to report the measurement gap requirement to the network device.

The network device may further indicate the terminal device to report the measurement gap requirements for the target bands. For example, the RRC reconfiguration message/RRC resume message further includes information about the target bands. In this case, the terminal device may report only whether the measurement gaps are required to measure these target bands. If the RRC reconfiguration message/RRC resume message does not include information about the target bands, the terminal device may report whether all supported bands require measurement gaps.

It should be noted that after the terminal device reports a current measurement gap requirement for the first time, if the current measurement gap requirement of the terminal device changes, the terminal device subsequently reports a current measurement gap requirement again by using an RRC reconfiguration message. For example, for the first time, the network device indicates, by using an RRC reconfiguration message, the terminal device to report the measurement gap requirement, and the terminal device reports the current measurement gap requirement (for example, a measurement gap requirement A) to the network device by using an RRC reconfiguration complete message. Then, the network device sends an RRC reconfiguration message to the terminal device again. Because the network device has previously indicated the terminal device to report the measurement gap requirement, if the current measurement gap requirement of the terminal device is different from the previously reported measurement gap requirement (for example, the current measurement gap requirement is a measurement gap requirement B), the terminal device reports the measurement gap requirement B to the network device by using an RRC reconfiguration complete message. If the current measurement gap requirement of the terminal device is the same as the previously reported measurement gap requirement (for example, the current measurement gap requirement is still the measurement gap requirement A), the terminal device is not required to report the measurement gap requirement to the network device again by using an RRC reconfiguration complete message.

The measurement gap requirement of the terminal device may change because a "user identity" of the terminal device changes. The "user identity" herein is a logical concept. For example, the "user identity" may correspond to a SIM card, subscriber information, a virtual SIM card, or a subscriber identity (for example, an international mobile subscriber identity (international mobile subscriber identity, IMSI) or a temporary mobile subscriber identity (temporary mobile subscriber identity, TMSI)). Different "user identities" logically correspond to different communication entities. For example, for a network side, a terminal device that supports two user identities may be considered as two communication entities. For example, the user identity is the SIM card, and a terminal device that supports a plurality of SIM cards is a physical communication entity. However, the network device identifies the terminal device that supports the plurality of SIM cards as a plurality of different communication entities, where one SIM card corresponds to one communication entity. In embodiments of this application, descriptions are mainly provided by using an example in which the "user identity" corresponds to the SIM card.

The different user identities may have different measurement gap requirements. For a terminal device that supports a plurality of user identities, as a user identity of the terminal device is switched, the terminal device has different measurement gap requirements. The terminal device that supports two user identities (referred to as a dual-SIM terminal for short) is used as an example. It is assumed that a SIM card 1 and a SIM card 2 are installed on the terminal device, and the SIM card 1 and the SIM card 2 share a radio frequency channel of the terminal device. When the SIM card 1 is in an RRC connected state, the SIM card 2 is in an RRC idle state or an RRC inactive state. From a perspective of the SIM card 1, when only the SIM card 1 in the dual-SIM terminal is in the RRC connected state, the SIM card 1 may occupy all capabilities of the dual-SIM terminal. When the SIM card 2 enters the RRC connected state from the RRC idle state or the RRC inactive state, the SIM card 2 is also required to occupy some capabilities or all capabilities of the dual-SIM terminal, to implement a normal communication function. In this case, a capability of the SIM card 1 may change from occupying all the capabilities of the dual-SIM terminal to occupying some capabilities of the dual-SIM terminal. That is, the capability of the SIM card 1 changes. Because the SIM card 1 has occupied the some capabilities of the dual-SIM terminal, the SIM card 2 cannot use all the capabilities of the dual-SIM terminal, and can occupy only the some capabilities of the dual-SIM terminal.

To enable the network device to learn of a latest capability of the terminal device, a temporary capability restriction (temporary capability restriction) mechanism (which may also be referred to as a temporary capability update mechanism) is introduced. The temporary capability restriction mechanism means the following: When the terminal device is in the RRC connected state, and a capability of the terminal device changes, the terminal device may indicate a current temporary capability to the network device, to notify the network device that the capability of the terminal device is updated to the temporary capability. In this way, the network device configures the terminal device based on the temporary capability, to ensure that a configuration of the terminal device does not exceed the current capability of the terminal device. The temporary capability may alternatively be understood as a capability that may be directly updated when the terminal device is in the RRC connected state.

The temporary capability includes but is not limited to one or more of the following: a supported maximum multiple-input multiple-output (multiple-input multiple-output, MIMO) layer quantity, a supported secondary cell (secondary cell, SCell), a supported band combination (band combination, BC), or a measurement gap capability. The measurement gap requirement may be updated or an updated measurement gap requirement of the terminal device may be indicated by using the temporary capability update mechanism.

The network device may enable the temporary capability restriction mechanism, and the terminal device may report the temporary capability by using a user equipment assistance information (UE assistance information) message. The network device determines, based on the temporary capability of the terminal device, whether to reconfigure the terminal device. For example, if a current configuration of the terminal device does not match the temporary capability of the terminal device, the network device sends an RRC reconfiguration message to the terminal device based on the temporary capability of the terminal device. If a current configuration of the terminal device matches the temporary capability of the terminal device, the network device is not required to reconfigure the terminal device. That the network device enables the temporary capability restriction mechanism may alternatively be replaced with the following: "The network device configures the temporary capability restriction mechanism", "the network device indicates/configures that the terminal device is allowed to use the temporary capability restriction mechanism", or "the network device indicates/configures that the terminal device is allowed to report the temporary capability". For example, the network device sends the RRC reconfiguration message to the terminal device, where the RRC reconfiguration message includes indication information; and the indication information indicates that the terminal device is allowed to report the temporary capability by using the UAI message, or the indication information is for enabling the terminal device to send assistance information for temporary capability restriction (assistance information for temporary capability restriction).

Optionally, when the capability changes, the terminal device reports the temporary capability of the terminal device by using the UAI message only when the network device enables the temporary capability restriction mechanism. If the network device does not enable the temporary capability restriction mechanism, even if the capability of the terminal device changes, the terminal device may not report the temporary capability of the terminal device by using the UAI message.

It should be noted that, in the temporary capability restriction mechanism, the terminal device determines, by making a comparison with a temporary capability included in a previous UAI message, whether the capability changes. For example, the UAI message last reported by the terminal device includes a measurement gap requirement A. If a current measurement gap requirement of the terminal device is a measurement gap requirement B, the terminal device sends a UAI message again, where the UAI message includes the measurement gap requirement B. If a current measurement gap requirement of the terminal device is still the measurement gap requirement A, the terminal device is not required to send a UAI message again.

That the terminal device reports the measurement gap requirement based on the RRC reconfiguration message/RRC resume message and reports the measurement gap requirement based on the temporary capability update mechanism is two independent procedures. In other words, the terminal device reports, depending only on whether a current measurement gap requirement changes compared with a measurement gap requirement last reported by using an RRC reconfiguration message/RRC resume message, the measurement gap requirement by using the RRC reconfiguration message/RRC resume message. Similarly, the terminal device reports, depending only on whether a current measurement gap requirement changes compared with a measurement gap requirement last reported by using a UAI message, the measurement gap requirement by using the UAI message. When both procedures exist, a same measurement gap requirement may be repeatedly reported, or measurement gap requirement reporting may be missed. Consequently, the measurement gap requirement reported by the terminal device is not the latest. As a result, a related parameter configured by the network side for the terminal device is inapplicable, and normal communication of the terminal device is affected.

For ease of understanding, FIG. 2 shows two independent procedures in which a terminal device reports measurement gap requirements. In FIG. 1, a network device enables a temporary capability update mechanism.

In FIG. 2, the measurement gap requirements sequentially reported by the terminal device are the following: S201: The terminal device reports a measurement gap requirement A by using an RRC reconfiguration complete message. S202: The terminal device reports a measurement gap requirement B by using a UAI message. S203: The terminal device reports the measurement gap requirement B by using an RRC reconfiguration complete message. S204: The terminal device reports a measurement gap requirement C by using an RRC reconfiguration complete message. S205: The terminal device reports the measurement gap requirement B by using UAI (which is not actually performed, and therefore is shown by using a dashed line).

As shown in S201 and S202, after reporting the "measurement gap requirement A" by using the RRC reconfiguration complete message, the terminal device finds that a current measurement gap requirement changes to the "measurement gap requirement B". In this case, the terminal device reports the "measurement gap requirement B" by using the UAI. Then, the terminal device receives again an RRC reconfiguration message sent by the network device. In this case, the terminal device determines that a current measurement gap (namely, the measurement gap requirement B) is different from the "measurement gap requirement A" in S201, and then the terminal device reports the "measurement gap requirement B" by using the RRC reconfiguration complete message. Then, the terminal device receives again an RRC reconfiguration message sent by the network device. In this case, the terminal device determines that a current measurement gap (namely, the measurement gap requirement C) is different from the "measurement gap requirement B" in S203, and then the terminal device reports the "measurement gap requirement C" by using the RRC reconfiguration complete message.

It can be learned from FIG. 2 that, from S202 to S203, actually, a measurement gap requirement of the terminal device is always the "measurement gap requirement B". However, in S203, the RRC reconfiguration complete message sent by the terminal device still includes the "measurement gap requirement B". It can be learned that the terminal device repeatedly reports the measurement gap requirement. In addition, it is assumed that a measurement gap requirement of the terminal device changes from the "measurement gap requirement C" to the "measurement gap requirement B" after S204. The terminal device should report the "measurement gap requirement B" by using the UAI message. However, the terminal device makes a comparison with the measurement gap requirement (namely, the measurement gap requirement B in S202) included in the last sent UAI message, and finds that the measurement gap requirement of the terminal device does not change. Therefore, the "measurement gap requirement B" is not reported. That is, S205 does not exist. Consequently, the network device considers that a current measurement gap requirement of the terminal device is the "measurement gap requirement C" in S204, instead of the latest "measurement gap requirement B".

In a handover (the terminal device is handed over from a source network device to a target network device) scenario, to enable the target network device to learn of a measurement gap requirement of the terminal device, the source network device forwards the measurement gap requirement of the terminal device to the target network device. In an implementation, the source network device sends, to the target network device, both measurement gap requirements reported by the terminal device by using an RRC message and a UAI message. However, a measurement gap requirement last reported by the terminal device by using an RRC message may be different from a measurement gap requirement last reported by the terminal device by using a UAI message. Consequently, the target network device does not know which is actually a current measurement gap requirement of the terminal device. As a result, information (for example, a measurement gap configuration) configured by the target network device for the terminal device is incorrect. In embodiments of this application, the RRC message includes an RRC reconfiguration complete message and/or an RRC resume complete message.

To resolve the foregoing technical problem, the methods in embodiments of this application are provided. In embodiments of this application, when a terminal device is configured to: report a measurement gap requirement, and report a temporary capability by using UAI, the terminal device may compare whether a current measurement gap requirement changes compared with a last reported measurement gap requirement. The last reported measurement gap requirement is a last reported measurement gap requirement in a measurement gap requirement reported by using an RRC message and a measurement gap requirement reported by using a UAI message. If the current measurement gap requirement changes compared with the last reported measurement gap requirement, the terminal device reports the current measurement gap requirement. If the current measurement gap requirement changes compared with the last reported measurement gap requirement, the terminal device does not report the current measurement gap requirement. According to the methods provided in embodiments of this application, it can be ensured that the measurement gap requirement reported by the terminal device is the current measurement gap requirement, the measurement gap requirement is not repeatedly reported, and measurement gap requirement reporting is not missed.

In a handover scenario, the terminal device or a source network device may report the current measurement gap requirement of the terminal device to a target network device, to reduce incorrect configuration performed by the target network device.

With reference to the foregoing content and the accompanying drawings, the following describes the technical solutions provided in embodiments of this application.

The methods provided in embodiments of this application are applicable to a terminal device that supports at least two user identities. The terminal that supports two user identities is, for example, a terminal device that supports dual SIM dual standby (dual SIM dual active, DSDA) or a terminal device that supports dual SIM dual receive single transmit (dual receive-DSDS, DR-DSDS).

In embodiments of this application, the "measurement gap requirement" and the "measurement gap capability" are interchangeable. "When", "in case", and "if' all mean that an apparatus performs corresponding processing in an objective case, are not intended to limit time, do not require the apparatus to necessarily have a determining action during implementation, and do not mean other limitation. Unless otherwise specified, "if' and "in case" are interchangeable, and "when" and "in a case of' are interchangeable. "When" and "if'/"in case" are interchangeable.

Unless otherwise specified, a quantity of nouns represents "a singular noun or a plural noun", namely, "one or more". "A plurality of' means two or more. In view of this, "a physical of' may alternatively be understood as "at least two" in embodiments of this application. "At least one" may be one or more, for example, at least one is one, two, or more. For example, including at least one means including one, two, or more, and does not limit which items are included. For example, if at least one of A, B, and C is included, A, B, C, A and B, A and C, B and C, or A, B, and C may be included. Likewise, understanding of descriptions such as "at least one" is similar. "At least one of the following" or a similar expression thereof indicates any combination of these items, including a single item or any combination of plural items. For example, "at least one of A, B, and C" includes A, B, C, AB, AC, BC, or ABC. "And/or" describes the association relationship between the associated objects, and represents that three relationships may exist. For example, A and/or B may represent the following three cases: Only A exists, both A and B exist, and only B exists. In addition, unless otherwise specified, the character "/" generally indicates an "or" relationship between the associated objects.

Unless otherwise specified, ordinal numbers such as "first" and "second" in embodiments of this application are for distinguishing between a plurality of objects, but are not intended to limit a sequence, a time sequence, priorities, or importance of the plurality of objects. In addition, descriptions of "first" and "second" do not mean that objects are necessarily different. For example, a first measurement gap requirement and a second measurement gap requirement indicate that there are two measurement gap requirements, and do not limit priorities or importance of the two measurement gap requirements.

In the methods (for example, a communication method 300 to a communication method 800) provided in embodiments of this application, steps performed by a network device may be implemented by a RAN device, or may be implemented by a component (for example, a baseband chip or another module like a processing unit or a processor) in the RAN device. For example, the network device may be the network device in 1, or may be a chip (system) in the network device in FIG. 1. Steps performed by a terminal device may be implemented by the terminal device, or may be implemented by a component (for example, a module like a chip, a processing unit, or a processor) in the terminal device. The terminal device may be the terminal device shown in FIG. 1, or may be a chip (system) in the terminal device in FIG. 1.

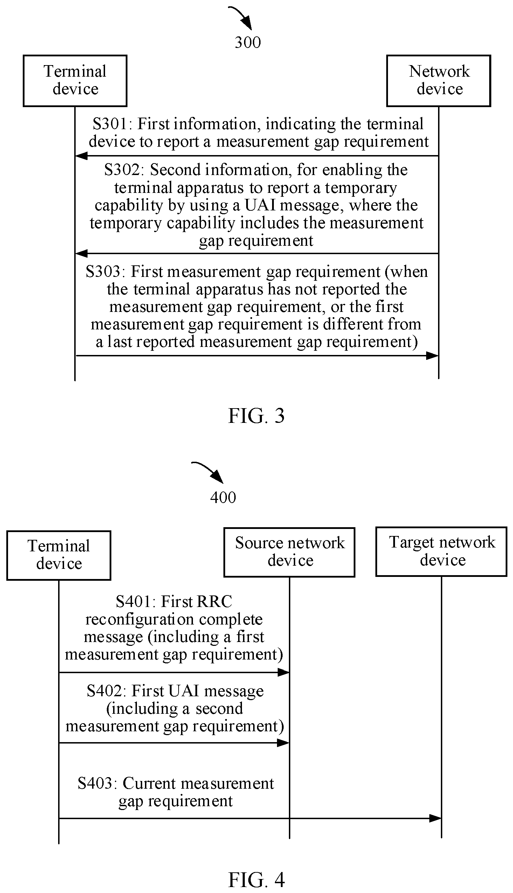

FIG. 3 is a schematic flowchart of a communication method 300 according to an embodiment of this application. For example, in FIG. 3, an example in which the communication method 300 is performed by a network device and a terminal device is used to describe the method from a perspective of interaction between the network device and the terminal device. It should be understood that the communication method 300 may alternatively be implemented by another apparatus, for example, a chip or a communication apparatus that has a communication function. As shown in FIG. 3, a procedure of the communication method 300 includes the following steps.

S301: The network device sends first information to the terminal device, where the first information indicates the terminal device to report a measurement gap requirement.

Accordingly, the terminal device receives the first information from the network device, where the first information may indicate the terminal device to report the measurement gap requirement. That the first information indicates the terminal device to report the measurement gap requirement may be replaced with the following: The first information enables the terminal device to report the measurement gap requirement, the first information indicates that the terminal device is allowed to report the measurement gap requirement, or the first information is for configuring the terminal device to report the measurement gap requirement. The terminal device receives the first information from the network device, and may report the measurement gap requirement to the network device. The network device configures, by using the first information, the terminal device to report the measurement gap requirement. That the network device sends the first information or that the terminal device receives the first information may alternatively be considered as that the terminal device is configured to report the measurement gap requirement. The terminal device reports the measurement gap requirement to the network device based on the first information.

The first information may be an RRC reconfiguration message or an RRC resume message. If the network device sends the RRC reconfiguration message or the RRC resume message to the terminal device, the terminal device is indicated, by default, to report the measurement gap requirement. Alternatively, the first information may be carried in an RRC reconfiguration message or an RRC resume message, to indicate the terminal device to report the measurement gap requirement.

Optionally, the first information includes filtering information, and the filtering information indicates a target band for which the terminal device is requested to report the measurement gap requirement. In this case, the first information indicates the terminal device to report a measurement gap requirement corresponding to the target band, and the terminal device is not required to report a measurement gap requirement corresponding to a band other than the target band. For example, target bands indicated by the filtering information include {band 1, band 2, band 3}. Measurement gap requirements reported by the terminal device include a measurement gap requirement corresponding to the band 1, a measurement gap requirement corresponding to the band 2, and a measurement gap requirement corresponding to the band 3. If the first information does not include filtering information, the terminal device may report measurement gap requirements corresponding to all bands supported by the terminal device.

S302: The network device sends second information to the terminal device, where the second information is for enabling the terminal device to report a temporary capability by using a UAI message, and the temporary capability includes the measurement gap requirement.

Accordingly, the terminal device receives the second information from the network device, where the second information may be carried in an RRC reconfiguration message. For example, the second information may be carried in an other configuration (otherconfig) field in the RRC reconfiguration message. That the second information is for enabling the terminal device to report the temporary capability by using UAI may be replaced with the following: The second information is for configuring the terminal device to report the temporary capability by using the UAI message, the second information indicates that the terminal device is allowed to report the temporary capability by using the UAI message, the second information is for enabling/configuring a temporary capability update mechanism, the second information indicates that the terminal device is allowed to use a temporary capability restriction mechanism, the second information is for enabling sending of UAI for temporary capability restriction, or the second information is for enabling reporting of the temporary capability of the terminal device. That the network device sends the second information or that the terminal device receives the second information may alternatively be considered as that the terminal device is enabled to report the temporary capability by using the UAI message. Because the temporary capability includes the measurement gap requirement, the terminal device may report the measurement gap requirement after receiving the second information.

A sequence of performing S301 and S302 is not limited in this embodiment of this application. For example, S301 may be performed before S302, or may be performed after S302. In addition, S301 and S302 are intended to indicate that the terminal device is configured to report the measurement gap requirement and is enabled to report the temporary capability by using the UAI message. In a possible implementation, S301 and S302 are not mandatory steps, provided that the terminal device is configured to report the measurement gap requirement and is enabled to report the temporary capability by using the UAI message.

S303: The terminal device sends a first measurement gap requirement to the network device.

The first measurement gap requirement is a current measurement gap requirement of the terminal device. When the terminal device receives both the first information and the second information, in a process in which the terminal device reports the measurement gap requirement to the network device, a same measurement gap requirement may be repeatedly reported, or measurement gap requirement reporting may be missed. Therefore, in this embodiment of this application, when reporting the measurement gap requirement, the terminal device may determine whether to report the measurement gap requirement to the network device, to avoid repeatedly reporting the measurement gap requirement, thereby reducing signaling overheads. In addition, missing of measurement gap requirement reporting can also be avoided, to ensure normal communication between the terminal device and the network device, and improve communication efficiency.

For example, when one or more of the following conditions are satisfied, the terminal device determines to report the first measurement gap requirement to the network device. When one or more of the following conditions are not satisfied, the terminal device may not report the first measurement gap requirement to the network device.

**Condition A:** The terminal device has not reported the measurement gap requirement, or the terminal device has not reported the measurement gap requirement to the network device.

If the terminal device has not reported the measurement gap requirement, the terminal device reports the first measurement gap requirement to the network device, so that the network device learns of the current measurement gap requirement of the terminal device.

That the terminal device has not reported the measurement gap requirement includes that the terminal device has not reported measurement gap requirements by using an RRC reconfiguration complete message, an RRC resume complete message, and the UAI message. Correspondingly, the condition A may be the following: The terminal device has not reported the measurement gap requirements by using the RRC reconfiguration complete message, the RRC resume complete message, and the UAI message. Alternatively, the condition A may be the following: The terminal device is configured to report the temporary capability by using the UAI message, and the terminal device has not reported the measurement gap requirements by using the RRC reconfiguration complete message, the RRC resume complete message, and the UAI message.

It should be noted that, that the terminal device has not reported the measurement gap requirement means that the terminal device has not reported the measurement gap requirement after each time the terminal device enters an RRC connected state. That the terminal device enters the RRC connected state means that the terminal device enters the RRC connected state from an RRC idle state or an RRC active state.

When the first information is carried in the RRC reconfiguration message, it may be considered that the network device configures the terminal device to report the measurement gap requirement. In a case of the condition A, the terminal device may report the first measurement gap requirement to the network device by using the RRC reconfiguration complete message. For example, the terminal device sends the RRC reconfiguration complete message to the network device, where the RRC reconfiguration complete message includes the first measurement gap requirement. From this perspective, the condition A may be the following: The terminal device is configured to report the measurement gap requirement, and the terminal device has not reported the measurement gap requirements by using the RRC reconfiguration complete message, the RRC resume complete message, and the UAI message.

When the first information is carried in the RRC resume message, it may alternatively be considered that the network device configures the terminal device to report the measurement gap requirement. When the condition A is satisfied, the terminal device reports the first measurement gap requirement to the network device by using the RRC resume complete message. For example, the terminal device sends the RRC resume complete message to the network device, where the RRC resume complete message includes the first measurement gap requirement. From this perspective, the condition A is equivalent to the following: The terminal device is configured to report the measurement gap requirement, and the terminal device has not reported the measurement gap requirements by using the RRC reconfiguration complete message, the RRC resume complete message, and the UAI message. It may be understood that before the terminal device receives the RRC resume message, the terminal device definitely has not reported the measurement gap requirement.

Optionally, the terminal device reports the first measurement gap requirement to the network device only when the terminal device has an expected/required measurement gap requirement and the condition A is satisfied. When the terminal device does not have an expected measurement gap requirement, the terminal device does not report the first measurement gap requirement to the network device, to reduce unnecessary measurement gap requirement reporting. In other words, even if the terminal device is configured to report the measurement gap requirement, measurement gap requirement reporting is triggered only when the terminal device has the expected measurement gap requirement. This can reduce the signaling overheads, and improve system resource utilization.

That the terminal device has the expected measurement gap requirement is also one of conditions for reporting the measurement gap requirement by the terminal device. Correspondingly, the condition A may be the following: The terminal device has the expected measurement gap requirement, and the terminal device has not reported the measurement gap requirements by using the RRC reconfiguration complete message, the RRC resume complete message, and the UAI message. Alternatively, the condition A is the following: The terminal device has the expected measurement gap requirement, the terminal device is configured to report the measurement gap requirement, and the terminal device has not reported the measurement gap requirements by using the RRC reconfiguration complete message, the RRC resume complete message, and the UAI message.

When the terminal device receives the second information, and the condition A is satisfied, the terminal device reports the first measurement gap requirement to the network device by using the UAI message. In this case, the condition A is also equivalent to the following: The terminal device is configured to report the temporary capability by using the UAI message, and the terminal device has not reported the measurement gap requirements by using the RRC reconfiguration complete message, the RRC resume complete message, and the UAI message. It may be understood that the terminal device initiates transmission of the UAI message before sending the UAI. "Initiating the transmission of the UAI message" means initializing (initiate) the transmission of the UAI message to provide the first measurement gap requirement.

Similarly, when the terminal device reports the first measurement gap requirement to the network device by using the UAI message, the terminal device reports the first measurement gap requirement to the network device only when the terminal device has the expected/required measurement gap requirement. When the terminal device does not have the expected measurement gap requirement, the terminal device may not report the first measurement gap requirement to the network device, to reduce signaling overheads of the UAI message, and improve the system resource utilization. That the terminal device has the expected measurement gap requirement is also one of the conditions for reporting the measurement gap requirement by the terminal device. From this perspective, the condition A may be the following: The terminal device has the expected measurement gap requirement, the terminal device is configured to report the temporary capability by using the UAI message, and the terminal device has not reported the measurement gap requirements by using the RRC reconfiguration complete message, the RRC resume complete message, and the UAI message.

**Condition B:** The first measurement gap requirement is different from a last reported measurement gap requirement.

The last reported measurement gap requirement is a last reported measurement gap requirement in a measurement gap requirement included in an RRC reconfiguration complete message and a measurement gap requirement included in the UAI message. For example, a measurement gap requirement last reported by the terminal device by using an RRC reconfiguration complete message is a measurement gap requirement A, and a measurement gap requirement last reported by the terminal device by using a UAI message is a measurement gap requirement B. When the RRC reconfiguration complete message last sent by the terminal device is later than the UAI message last sent by the terminal device, the last reported measurement gap requirement is the measurement gap requirement A. When the RRC reconfiguration complete message last sent by the terminal device is earlier than the UAI message last sent by the terminal device, the last reported measurement gap requirement is the measurement gap requirement B.

Alternatively, the last reported measurement gap requirement is a last reported measurement gap requirement in a measurement gap requirement included in an RRC reconfiguration complete message, a measurement gap requirement included in an RRC resume complete message, and a measurement gap requirement included in the UAI message. For example, a measurement gap requirement last reported by the terminal device by using an RRC reconfiguration complete message is a measurement gap requirement A, a measurement gap requirement last reported by the terminal device by using a UAI message is a measurement gap requirement B, and a measurement gap requirement last reported by the terminal device by using an RRC resume complete message is a measurement gap requirement C. When the RRC reconfiguration complete message last sent by the terminal device is later than the UAI message last sent by the terminal device and the RRC resume complete message last sent by the terminal device, the last reported measurement gap requirement is the measurement gap requirement A. When the RRC resume complete message last sent by the terminal device is later than the UAI message last sent by the terminal device and the RRC reconfiguration complete message last sent by the terminal device, the last reported measurement gap requirement is the measurement gap requirement C. When the UAI message last sent by the terminal device is later than the RRC resume complete message last sent by the terminal device and the RRC reconfiguration complete message last sent by the terminal device, the last reported measurement gap requirement is the measurement gap requirement B.

When the terminal device has reported the measurement gap requirement, if the first measurement gap requirement is the same as the last reported measurement gap requirement, it indicates that a measurement gap requirement expected by the terminal device does not change, and the terminal device is not required to report the first measurement gap requirement again, to avoid repeatedly reporting the measurement gap requirement, thereby reducing the signaling overheads, and improving system resource utilization. If the first measurement gap requirement is different from the last reported measurement gap requirement, it indicates that a measurement gap requirement expected by the terminal device changes, and the terminal device may report the first measurement gap requirement, to avoid missing reporting of a latest measurement gap requirement, so that the network device configures an appropriate related parameter for the terminal device based on the measurement gap requirement, to ensure the normal communication between the terminal device and the network device as much as possible.

Optionally, when the terminal device reports the first measurement gap requirement to the network device by using the UAI message, the condition B may be the following: The terminal device is configured to report the measurement gap requirement, and the first measurement gap requirement is different from the last reported measurement gap requirement; or the terminal device has an expected/required measurement gap requirement, the terminal device is configured to report the measurement gap requirement, and the first measurement gap requirement is different from the last reported measurement gap requirement. Alternatively, the condition B is the following: The terminal device is configured to report the temporary capability by using the UAI message, and the first measurement gap requirement is different from the last reported measurement gap requirement; or the terminal device has an expected/required measurement gap requirement, the terminal device is configured to report the temporary capability by using the UAI message, and the first measurement gap requirement is different from the last reported measurement gap requirement.

When the first measurement gap requirement is different from the last reported measurement gap requirement, the terminal device sends the first measurement gap requirement to the network device. The last reported measurement gap requirement and a message carrying the first measurement gap requirement may vary with a message carrying the first information. The following uses examples for description in different scenarios.

Scenario 1: The first information is carried in the RRC reconfiguration message.
(1) If the terminal device has reported the measurement gap requirement by using the RRC reconfiguration complete message, and the terminal device has not reported the measurement gap requirement by using UAI, the last reported measurement gap requirement is a last reported measurement gap requirement in the measurement gap requirement included in the RRC reconfiguration complete message sent by the terminal device.
   In this case, the first measurement gap requirement may be carried in the RRC reconfiguration complete message. For example, the terminal device receives the RRC reconfiguration message. When the first measurement gap requirement is different from the last reported measurement gap requirement, the terminal device sends the RRC reconfiguration complete message to the network device, where the RRC reconfiguration complete message includes the first measurement gap requirement. Alternatively, the first measurement gap requirement may be carried in the UAI message. For example, if the terminal device determines that a current measurement gap requirement changes from the last reported measurement gap requirement to the first measurement gap requirement, the terminal device sends the UAI message to the network device, where the UAI message includes the first measurement gap requirement.
(2) If the terminal device has reported the measurement gap requirement by using the RRC reconfiguration complete message, and the terminal device has further reported the measurement gap requirement by using the UAI message, the last reported measurement gap requirement is the last reported measurement gap requirement in the measurement gap requirement included in the RRC reconfiguration complete message and the measurement gap requirement included in the UAI message in the terminal device.

In this case, the first measurement gap requirement may be carried in the RRC reconfiguration complete message. For example, the terminal device receives the RRC reconfiguration message. When the first measurement gap requirement is different from the last reported measurement gap requirement, the terminal device sends the RRC reconfiguration complete message to the network device, where the RRC reconfiguration complete message includes the first measurement gap requirement. Alternatively, the first measurement gap requirement may be carried in the UAI message. For example, when the terminal device determines that a current measurement gap requirement changes from the last reported measurement gap requirement to the first measurement gap requirement, the terminal device sends the UAI message to the network device, where the UAI message includes the first measurement gap requirement.

Scenario 2: The first information is carried in the RRC resume message. In this case, the terminal device may report the measurement gap requirement by using the RRC resume complete message, or may report the measurement gap requirement by using an RRC configuration complete message.
(1) If the terminal device has reported the measurement gap requirement by using the RRC reconfiguration complete message and/or the RRC resume complete message, and the terminal device has not reported the measurement gap requirement by using UAI, the last reported measurement gap requirement is a last reported measurement gap requirement in the measurement gap requirement included in the RRC reconfiguration complete message and the measurement gap requirement included in the RRC resume complete message.
   In this case, the first measurement gap requirement may be carried in the RRC resume complete message (in this case, the measurement gap requirement is reported for the first time). For example, the terminal device receives the RRC resume message, and the terminal device sends the RRC resume complete message to the network device, where the RRC resume complete message includes the first measurement gap requirement. Alternatively, the first measurement gap requirement may be carried in the RRC configuration complete message. For example, the terminal device receives the RRC resume message. When the first measurement gap requirement is different from the last reported measurement gap requirement, the terminal device sends the RRC configuration complete message to the network device, where the RRC configuration complete message includes the first measurement gap requirement. Alternatively, the first measurement gap requirement may be carried in the UAI message. For example, if the terminal device determines that a current measurement gap requirement changes from the last reported measurement gap requirement to the first measurement gap requirement, the terminal device sends the UAI message to the network device, where the UAI message includes the first measurement gap requirement.
(2) If the terminal device has reported the measurement gap requirement by using the RRC reconfiguration complete message, and the terminal device has further reported the measurement gap requirement by using the UAI message, the last reported measurement gap requirement is the last reported measurement gap requirement in the measurement gap requirement included in the RRC reconfiguration complete message, the measurement gap requirement included in the RRC resume complete message, and the measurement gap requirement included in the UAI message.

In this case, the first measurement gap requirement may be carried in the RRC reconfiguration complete message. For example, the terminal device receives an RRC reconfiguration message. When the first measurement gap requirement is different from the last reported measurement gap requirement, the terminal device sends the RRC reconfiguration complete message to the network device, where the RRC reconfiguration complete message includes the first measurement gap requirement. Alternatively, the first measurement gap requirement may be carried in the UAI message. For example, when the terminal device determines that a current measurement gap requirement changes from the last reported measurement gap requirement to the first measurement gap requirement, the terminal device sends the UAI message to the network device, where the UAI message includes the first measurement gap requirement.

Scenario 3: The first information is carried in the RRC reconfiguration message and the RRC resume message. For example, the network device sends both the RRC reconfiguration message and the RRC resume message to the terminal device.

In this case, processing behavior of the terminal device in the scenario 2 is also applicable to the scenario 3. Details are not described herein again.

Optionally, if the first information includes the filtering information, the first measurement gap requirement sent by the terminal device corresponds to the target band indicated by the filtering information. For example, the first measurement gap requirement reported by the terminal device by using the RRC reconfiguration complete message corresponds to the target band. For example, the first measurement gap requirement reported by the terminal device by using the RRC resume complete message corresponds to the target band. For another example, the first measurement gap requirement reported by the terminal device by using the UAI message also corresponds to the target band, so that the reported first measurement gap requirement is a measurement gap requirement required by the network device. In this way, the terminal device does not report a measurement gap requirement that is not required by the network device, so that signaling overheads of the first measurement gap requirement in the UAI message can be reduced, and the system resource utilization can be improved.

Optionally, when the condition B is satisfied, the terminal device reports the first measurement gap requirement, and starts a timer. For example, if the condition B is satisfied, the terminal device reports the first measurement gap requirement by using the RRC reconfiguration complete message, the RRC resume complete message, or the UAI message, and starts the timer. In this way, the terminal device can be prohibited from reporting the measurement gap requirement by using the UAI message in a running process of the timer, to avoid a case in which the terminal device frequently sends UAI messages. This timer is also referred to as prohibit timer (prohibit timer). Running duration of the timer may be predefined, or may be configured by the network device. For example, the second information further indicates the running duration of the timer. The network device may alternatively configure the running duration of the timer by using signaling other than the second information.

Correspondingly, the condition B may be the following: The first measurement gap requirement is different from the last reported measurement gap requirement, and the prohibit timer is not in the running process; or the terminal device has the expected/required measurement gap requirement, the first measurement gap requirement is different from the last reported measurement gap requirement, and the prohibit timer is not in the running process. Alternatively, the condition B is the following: The terminal device is configured to report the temporary capability by using the UAI message, the first measurement gap requirement is different from the last reported measurement gap requirement, and the prohibit timer is not in the running process; or the terminal device has the expected/required measurement gap requirement, the terminal device is configured to report the temporary capability by using the UAI message, the first measurement gap requirement is different from the last reported measurement gap requirement, and the prohibit timer is not in the running process.

It should be noted that, if the prohibit timer is configured for the terminal device, that "the terminal device starts the prohibit timer" exists; or if the prohibit timer is not configured for the terminal device, or the prohibit timer is not supported (does not exist) in a protocol, that "the terminal device starts the prohibit timer" does not exist.

In the method 300, when the terminal device is configured to report the measurement gap requirement, and is enabled to report the temporary capability by using the UAI message, the measurement gap requirement reported to the network device is the last reported measurement gap requirement, so that a case in which the terminal device repeatedly reports the same measurement gap requirement can be avoided, to reduce the signaling overheads, and improve the system resource utilization. In addition, missing reporting of the latest measurement gap requirement can further be avoided, so that a related parameter configured by the network device for the terminal device based on the measurement gap requirement reported by the terminal device matches a capability of the terminal device, to ensure the normal communication between the terminal device and the network device.

In a handover scenario, if a terminal device initiates transmission of a UAI message in a period of time (for example, within a last second) before receiving a handover command/handover indication/RRC reconfiguration message, and a target network device has sent second information to the terminal device, the terminal device initiates transmission of a UAI message again after being handed over to the target network device. Alternatively, if the terminal device has initiated transmission of a UAI message after being configured to be allowed to perform transmission of the UAI message, and a target network device has sent second information to the terminal device, the terminal device also initiates transmission of a UAI message again after being handed over to the target network device. If a current measurement gap requirement of the terminal device does not change, the terminal device repeatedly reports the measurement gap requirement.

Therefore, in embodiments of this application, if the terminal device initiates the transmission of the UAI message within the last second before receiving the handover command/handover indication/RRC reconfiguration message, or the terminal device has sent a first UAI message in a first time period before receiving the handover command/handover indication/RRC reconfiguration message, the UAI message sent by the terminal device to the target network device again may not include the measurement gap requirement, to avoid a case in which the terminal device repeatedly reports the measurement gap requirement, thereby improving system resource utilization. For example, when the terminal device has reported a first measurement gap requirement to a source network device by using RRC reconfiguration complete message, or a first measurement gap requirement is carried in an RRC reconfiguration complete message, the terminal device sends a second UAI message to the target network device, where the second UAI message does not include the measurement gap requirement.

Optionally, the terminal device may still report the current measurement gap requirement to the target network device. For example, if the first UAI message sent by the terminal device includes the first measurement gap requirement, the terminal device sends the second UAI message to the target network device after being handed over to the target network device, where the second UAI message includes a second measurement gap requirement, and the second measurement gap requirement is the current measurement gap requirement.

As described above, in the handover scenario, the source network device sends, to the target network device, both measurement gap requirements reported by the terminal device by using an RRC message and the UAI message. In this way, the target network device does not learn of the current measurement gap requirement of the terminal device. Consequently, a related parameter configured by the target network device for the terminal does not match a capability of the terminal device. As a result, the terminal device cannot normally communicate with the network device.

Therefore, in embodiments of this application, it may be specified that the terminal device is handed over from the source network device to the target network device, and reports the current measurement gap requirement to the target network device. Alternatively, the target network device may indicate the terminal device to report the current measurement gap requirement. The terminal device is handed over from the source network device to the target network device based on an indication of a network device, and reports the current measurement gap requirement to the target network device. For example, the target network device sends first information to the terminal device, to trigger the terminal device to report the current measurement gap requirement to the target network device. The terminal device reports the current measurement gap requirement to the target network device based on the first information. Alternatively, the target network device may send the second information to the terminal device, so that the terminal device sends the UAI message having a temporary capability. The terminal device reports the current measurement gap requirement to the target network device based on the second information. After being handed over from the source network device to the target network device, the terminal device reports the current measurement gap requirement to the target network device. Therefore, a related parameter configured by the target network device for the terminal device based on the measurement gap requirement matches the capability of the terminal device, to ensure that the terminal device and the target network device can normally communicate with each other.

FIG. 4 is a schematic flowchart of a communication method 400 according to an embodiment of this application. In FIG. 4, the method is described from a perspective of interaction between a source network device, a target network device, and a terminal device. As shown in FIG. 4, a procedure of the communication method 400 includes the following steps.

S401: The terminal device sends a first RRC reconfiguration complete message to the source network device, where the first RRC reconfiguration complete message includes a first measurement gap requirement.

Accordingly, the source network device receives the first RRC reconfiguration complete message from the terminal device.

S402: The terminal device sends a first UAI message to the source network device, where the first UAI message includes a second measurement gap requirement.

Accordingly, the source network device receives the first UAI message from the terminal device.

The first measurement gap requirement is different from the second measurement gap requirement. It should be noted that S401 and S402 are independent of each other, and an execution sequence of S401 and S402 is not restricted by each other. For example, S401 may be performed before S402, or may be performed after S402.

S403: The terminal device is handed over from the source network device to the target network device, and sends a current measurement gap requirement to the target network device.

The terminal device is handed over from the source network device to the target network device. That is, the terminal device establishes an RRC connection to the target network device. After being handed over from the source network device to the target network device, the terminal device may send the current measurement gap requirement to the target network device. For example, the terminal device sends the current measurement gap requirement to the target network device by using an RRC reconfiguration complete message, or the terminal device sends the current measurement gap requirement to the target network device by using a UAI message.

If the target network device sends first information to the terminal device, the terminal device may send the RRC reconfiguration complete message to the target network device after being handed over from the source network device to the target network device, where the RRC reconfiguration complete message includes the current measurement gap requirement. For example, after being handed over to the target network device, the terminal device sends a second RRC reconfiguration complete message to the target network device, where the second RRC reconfiguration complete message includes the current measurement gap requirement.

If the target network device sends second information to the terminal device, or if the target network device sends first information and second information to the terminal device, the terminal device may initiate transmission of the UAI message again after being handed over to the target network device, where the UAI message may include the current measurement gap requirement. For example, after being handed over to the target network device, the terminal device sends a second UAI message to the target network device, where the second UAI message includes the current measurement gap requirement.

It should be noted that, if the terminal device initiates transmission of the UAI message in a period of time (for example, within a last second) before receiving a handover command/handover indication/RRC reconfiguration message, and the target network device sends the second information to the terminal device, the terminal device sends a UAI message (for example, a third UAI message) to the target network device again after being handed over to the target network device. The third UAI message does not include the current measurement gap requirement, to reduce repeated reporting of the same measurement gap requirement, thereby reducing signaling overheads, and improving a system resource rate.

According to the method 400, it is specified that the terminal device is handed over from the source network device to the target network device, and reports the current measurement gap requirement to the target network device, so that the target network device clearly learns of the current measurement gap requirement of the terminal device. In this way, a related parameter configured by the target network device for the terminal device based on the measurement gap requirement matches a capability of the terminal device, to ensure that the terminal device and the target network device can normally communicate with each other.

In an alternative solution of the method 400, in a handover scenario, a source network device may alternatively report a current measurement gap requirement of a terminal device to a target network device.

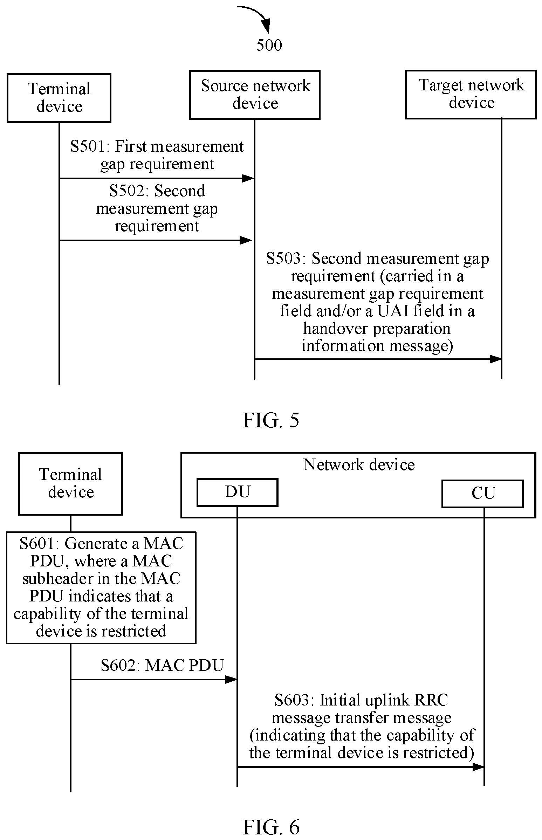

FIG. 5 is a schematic flowchart of a communication method 500 according to an embodiment of this application. In FIG. 5, the method is described from a perspective of interaction between a terminal device, a source network device, and a target network device. As shown in FIG. 5, a procedure of the communication method 500 includes the following steps.

S501: The terminal device sends a first measurement gap requirement to the source network device.

Accordingly, the source network device receives the first measurement gap requirement from the terminal device.

S502: The terminal device sends a second measurement gap requirement to the source network device.

Accordingly, the source network device receives the second measurement gap requirement from the terminal device, where the second measurement gap requirement is different from the first measurement gap requirement, and the second measurement gap requirement is a measurement gap requirement last reported by the terminal device accessing the source network device.

S501 and S502 may be understood as that the terminal device sequentially reports different measurement gap requirements. In S501 and S502, that the terminal device first reports the first measurement gap requirement and then reports the second measurement gap requirement is used as an example. For a network device, the second measurement gap requirement is a measurement gap last reported by the terminal device. It may alternatively be considered that the second measurement gap requirement is a current measurement gap requirement of the terminal device.

The following is similar to the method 300: The last reported measurement gap requirement may be a last reported measurement gap in measurement gap requirements included in an RRC reconfiguration complete message and a UAI message. Alternatively, the last reported measurement gap requirement may be a last reported measurement gap in measurement gap requirements included in an RRC reconfiguration complete message, an RRC resume complete message, and a UAI message. Accordingly, a message carrying the second measurement gap requirement is different from a message carrying the first measurement gap requirement. For example, a first measurement gap is carried in the RRC reconfiguration complete message, and the second measurement gap requirement is carried in the UAI message; or a first measurement gap is carried in the UAI message, and the second measurement gap requirement is carried in the RRC reconfiguration complete message. For another example, a first measurement gap is carried in an RRC reconfiguration resume message, and the second measurement gap requirement is carried in the UAI message; or a first measurement gap is carried in the UAI message, and the second measurement gap requirement is carried in the RRC resume complete message.

S503: The source network device sends the second measurement gap requirement to the target network device.

To enable the target network device to determine the current measurement gap requirement of the terminal device, the source network device may send the second measurement gap requirement to the target network device, so that a related parameter configured by the target network device for the terminal device based on the second measurement gap requirement matches a capability of the terminal device, to ensure normal communication between the terminal device and the target network device. It should be understood that a measurement gap requirement sent by the source network device to the target network device is only the second measurement gap requirement.

The source network device may send the second measurement gap requirement to the target network device by using a handover preparation information message. The handover preparation information message may include first indication information and second indication information. The first indication information may be carried in a measurement gap requirement (for example, needForGapsInfoNR) field, and the second indication information may be carried in a UAI (for example, ueAssistanceInformation) field. Alternatively, the first indication information may be measurement gap requirement information (for example, needForGapsInfoNR), and the second indication information is UAI (for example, ueAssistanceInformation).

There are the following three implementations in which the source network device sends the second measurement gap requirement to the target network device by using the handover preparation information message.

**Manner 1:** If the second measurement gap requirement reported by the terminal device is carried in an RRC message (for example, the RRC reconfiguration complete message or the RRC resume complete message), the first indication information indicates the second measurement gap requirement. If the second measurement gap requirement reported by the terminal device is carried in the UAI message, the second indication information indicates the second measurement gap requirement. Alternatively, if the second measurement gap requirement reported by the terminal device is carried in an RRC message, only the first indication information indicates the second measurement gap requirement. In this case, the second indication information does not exist or does not indicate a measurement gap requirement. If the second measurement gap requirement reported by the terminal device is carried in the UAI message, only the second indication information indicates the second measurement gap requirement. In this case, the first indication information does not exist or does not indicate a measurement gap requirement.

For example, when the second measurement gap requirement sent by the terminal device to the source network device is carried in the RRC message, the source network device sends the handover preparation information message to the target network device, where the measurement gap requirement field in the handover preparation information message carries the second measurement gap requirement, the UAI field in the handover preparation information message carries content in a UAI message sent by the terminal device to the source network device, and content in the UAI message does not include the measurement gap requirement. Alternatively, the source network device sends the handover preparation information message to the target network device, where the measurement gap requirement field in the handover preparation information message carries the second measurement gap requirement, and the handover preparation information message does not include the UAI field.

For another example, when the second measurement gap requirement sent by the terminal device to the source network device is carried in the UAI message, the source network device sends the handover preparation information message to the target network device, where the UAI field in the handover preparation information message carries the second measurement gap requirement, and the measurement gap requirement field in the handover preparation information message does not carry the second measurement gap requirement. Alternatively, the source network device sends the handover preparation information message to the target network device, where the UAI field in the handover preparation information message carries the second measurement gap requirement, and the handover preparation information message does not include the measurement gap requirement field.

The manner 1 is simpler because meanings of the measurement gap requirement field and the UAI field in the handover preparation information message are not required to be modified.

**Manner 2:** It is defined in a protocol or configured that the first indication information or the second indication information indicates the second measurement gap requirement.

The manner 2 may be understood as follows: It is defined in the protocol that only the first indication information indicates the second measurement gap requirement, or only the second indication information indicates second measurement gap information. This is irrelevant to a message carrying the second measurement gap requirement sent by the terminal device to the source network device.

Optionally, the measurement gap requirement field indicates a latest measurement gap requirement, and the measurement gap requirement field indicates the second measurement gap information; or the UAI field indicates a latest measurement gap requirement, and the UAI field indicates the second measurement gap information. The latest measurement gap requirement is the measurement gap requirement last reported by the terminal device accessing the source network device. The last reported measurement gap requirement is the last reported measurement gap requirement in the measurement gap requirement included in the RRC reconfiguration complete message, the measurement gap requirement included in the RRC resume complete message, and the measurement gap requirement included in the UAI message; or the last reported measurement gap requirement is the last reported measurement gap requirement in the measurement gap requirement included in the RRC reconfiguration complete message and the measurement gap requirement included in the UAI message.

If it is defined in the protocol that the first indication information indicates the second measurement gap requirement, the second measurement gap requirement is carried in the measurement gap requirement field in the handover preparation information message. When the second measurement gap requirement sent by the terminal device to the source network device is carried in the UAI message, the second measurement gap requirement sent by the source network device to the target network device is carried in the measurement gap requirement field in the handover preparation information message. When the second measurement gap requirement sent by the terminal device to the source network device is carried in the RRC reconfiguration complete message or the RRC resume complete message, the second measurement gap requirement sent by the source network device to the target network device is carried in the measurement gap requirement field in the handover preparation information message. In this case, the target network device may obtain the second measurement gap requirement only from the measurement gap requirement field, and use the measurement gap requirement field as the current latest measurement gap requirement of the terminal device.

Optionally, the UAI field in the handover preparation information message carries UAI that does not include the second measurement gap requirement.

For another example, if it is defined in the protocol that the second indication information indicates the second measurement gap requirement, the second measurement gap requirement is carried in the UAI field in the handover preparation information message. When the second measurement gap requirement sent by the terminal device to the source network device is carried in the RRC reconfiguration complete message or the RRC resume complete message, the second measurement gap requirement sent by the source network device to the target network device is carried in the UAI field in the handover preparation information message. When the second measurement gap requirement sent by the terminal device to the source network device is carried in the UAI message, the second measurement gap requirement sent by the source network device to the target network device is carried in the UAI field in the handover preparation information message. In this case, the target network device may obtain the second measurement gap requirement only from the UAI field, and use the measurement gap requirement field as the current latest measurement gap requirement of the terminal device.

**Manner 3:** Both the first indication information and the second indication information indicate the second measurement gap requirement.

Both the measurement gap requirement field and the UAI field in the handover preparation information message are for carrying the second measurement gap requirement. This is irrelevant to a message carrying the second measurement gap requirement sent by the terminal device to the source network device.

Optionally, both the measurement gap requirement field and the UAI field indicate a latest measurement gap requirement. The latest measurement gap requirement is the measurement gap requirement last reported by the terminal device accessing the source network device. The last reported measurement gap requirement is the last reported measurement gap requirement in the measurement gap requirement included in the RRC reconfiguration complete message, the measurement gap requirement included in the RRC resume complete message, and the measurement gap requirement included in the UAI message; or the last reported measurement gap requirement is the last reported measurement gap requirement in the measurement gap requirement included in the RRC reconfiguration complete message and the measurement gap requirement included in the UAI message.

For example, the source network device determines the second measurement gap requirement, and sends the handover preparation information message to the target network device, where the measurement gap requirement field in the handover preparation information message carries the second measurement gap requirement, and the UAI field in the handover preparation information message carries the second measurement gap requirement.

It may be understood that, if the target network device supports only measurement gap requirement reporting, but does not support temporary capability reporting performed by using the UAI message, the target network device can parse only content in the first indication information, but cannot parse content in the second indication information. In this case, if the first indication information indicates the second measurement gap requirement, the target network device may obtain the second measurement gap requirement. If the first indication information does not indicate the second measurement gap requirement, the target network device cannot obtain the second measurement gap requirement, and considers that the terminal device does not report a measurement gap requirement. Consequently, the target network device may perform incorrect configuration, or the terminal device may be triggered to repeatedly report a measurement gap requirement. Therefore, the manner 2 and the manner 3 are more compatible with the target network device.

According to the method 500, it is specified that the terminal device is handed over from the source network device to the target network device and how the source network device reports the current measurement gap requirement of the terminal device to the target network device, so that the target network device clearly learns of the current measurement gap requirement of the terminal device. In this way, the related parameter configured by the target network device for the terminal device based on the measurement gap requirement matches the capability of the terminal device, to ensure that the terminal device and the target network device can normally communicate with each other.

For a terminal device (also referred to as a multi-SIM (Multi-SIM, MUSIM) terminal device) in which a plurality of subscriber identity modules (subscriber identity modules, SIMs) are disposed, the terminal device may indicate, to a network device in an RRC setup (setup) process or an RRC resume (resume) process, that the terminal device is a terminal device whose capability is temporarily restricted (restricted) or that a capability of the terminal device is temporarily restricted. For example, in the RRC setup process, the terminal device may indicate, by using an RRC setup complete message, that the capability of the terminal device is temporarily restricted, to avoid a case in which a configuration carried in a 1^{st} RRC reconfiguration message exceeds a current capability of the terminal device. For another example, in the RRC resume process, the terminal device may indicate, by using an RRC resume request message, that the capability of the terminal device is temporarily restricted, to avoid a case in which a configuration carried in a 1^{st} RRC resume message exceeds a current capability of the terminal device.

In a possible manner, 1-bit information may indicate that the capability of the terminal device is temporarily restricted. For example, the RRC setup complete message or the RRC resume request message carries the 1-bit information, and the 1-bit information may further indicate a specific capability parameter set corresponding to the terminal device whose capability is restricted. The specific capability parameter set may be predefined in a protocol. However, the RRC resume request message has only one reserved bit left. If the one reserved bit indicates that the capability of the terminal device is temporarily restricted, the RRC resume request message has no available reserved bit, and a use scenario is limited.

Therefore, embodiments of this application provide an alternative solution. In this solution, a MAC subheader (subheader) in a MAC PDU for encapsulating an RRC resume message indicates that a terminal device is a terminal device whose capability is temporarily restricted or that a capability of a terminal device is restricted. For ease of understanding, a structure of the MAC PDU is first described.

The MAC PDU includes one or more MAC subPDUs (subPDUs), and each MAC subPDU may include any one of the following: (1) a MAC subheader only, A MAC subheader only (including padding (padding)); (2) a MAC subheader and a MAC service data unit (service data unit, SDU), A MAC subheader and a MAC SDU; (3) a MAC subheader and a MAC control element (control element, CE), A MAC subheader and a MAC CE; and (4) a MAC subheader and padding (padding), A MAC subheader and padding.

The MAC subheader includes the following content:
(1) LCID field indicating a logical channel identifier. The LCID field may indicate specific information that content in the MAC PDU is. For example, when an LCID is indicated as 52, it indicates that the corresponding content in the MAC PDU is a common control channel (common control channel, CCCH). In an RRC resume process, the CCCH is an RRC resume request message. Optionally, CCCHs may further be classified into a 48-bit CCCH (referred to as the CCCH) and a 64-bit CCCH (referred to as a CCCH 1) according to a message size. When the LCID is indicated as 52, the LCID indicates the CCCH. When the LCID is indicated as 0, the LCID indicates the CCCH 1.
(2) L field indicating a length of a corresponding MAC SDU or a variable-sized MAC CE.
(3) F field indicating a length of the L field.
(4) R field, which is a reserved bit, and is required to be set to 0.

FIG. 6 is a schematic flowchart of a communication method 600 according to an embodiment of this application. In FIG. 6, the method is described from a perspective of interaction between a network device and a terminal device. As shown in FIG. 6, a procedure of the communication method 600 includes the following steps.

S601: The terminal device generates a MAC PDU, where a MAC subheader in the MAC PDU indicates that a capability of the terminal device is restricted.

S602: The terminal device sends the MAC PDU to the network device.

When the terminal device sends an RRC resume request message, an RRC layer of the terminal device generates the RRC resume request message, and the RRC resume request message is delivered to a MAC layer of the terminal device for packet assembly to generate the MAC PDU. The MAC PDU is delivered to a physical layer of the terminal device, and is finally sent out by a physical layer. Accordingly, the network device receives the MAC PDU from the terminal device. The RRC resume request message is carried on a CCCH, and an uplink transmission channel corresponding to the CCCH is an uplink shared channel (uplink shared channel, UL-SCH).

In this embodiment of this application, if the capability of the terminal device is restricted, the MAC subheader included in the MAC PDU may indicate that the capability of the terminal device is temporarily restricted. A manner in which the MAC subheader indicates that the capability of the terminal device is temporarily restricted includes but is not limited to the following indication manners.

Indication manner 1: The MAC subheader includes a reserved bit, where a value of the reserved bit is a first value, to indicate that the capability of the terminal device is temporarily restricted.

For example, an R field in the MAC subheader indicates that the capability of the terminal device is temporarily restricted. A meaning of the R field may be redefined. For example, if a value of the R field is 1, the R field indicates that the capability of the terminal device is temporarily restricted. If a value of the R field is 0, the R field is a reserved bit, and has no special meaning.

Indication manner 2: The MAC subheader includes an LCID, and a value of the LCID indicates that the capability of the terminal device is temporarily restricted.

For example, the LCID is a value, to indicate that the capability of the terminal device is temporarily restricted. For another example, the value of the LCID falls within a preset range, to indicate that the capability of the terminal device is temporarily restricted.

Considering that an LCID 37 to an LCID 42 are reserved identifiers, and are not used, the preset range may be correspondingly [37, 42]. In this embodiment of this application, values in the LCID 37 to the LCID 42 are reused to indicate that the capability of the terminal device is temporarily restricted. For example, when the LCID falls within the preset range, the LCID may indicate that the capability of the terminal device is temporarily restricted. For example, when the LCID is a first value (for example, 37 in 37 to 42), it indicates that the capability of the terminal device is temporarily restricted. Alternatively, when the LCID is a second value (for example, 38 in 37 to 42), it indicates that the capability of the terminal device is temporarily restricted.

Optionally, it is specified in a protocol that the LCID is the first value, to indicate that the capability of the terminal device is temporarily restricted.

It may be understood that a message sent by the terminal device may be carried on the CCCH or a CCCH 1. A message size corresponding to the CCCH is 48 bits, and a message size corresponding to the CCCH 1 is 64 bits. If the terminal device does not indicate that the sent message is carried on the CCCH or the CCCH 1, the network device may parse the message by using an incorrect message size, causing a message parsing error. Therefore, the terminal device usually is required to indicate that the sent message is carried on the CCCH or the CCCH 1.

Considering a case in which the CCCH and the CCCH 1 are distinguished, when the LCID is a value, it may indicate that the capability of the terminal device is temporarily restricted and that content in the MAC PDU is the CCCH; or when the LCID is another value, it may indicate that the capability of the terminal device is temporarily restricted and that content in the MAC PDU is the CCCH 1. For example, when the LCID is the first value (for example, 37 in 37 to 42), it indicates that the content in the MAC PDU is the CCCH and that the capability of the terminal device is temporarily restricted. When the LCID is indicated as the second value (for example, 38 in 37 to 42), it indicates that the content in the MAC PDU is the CCCH 1 and that the capability of the terminal device is temporarily restricted.

Optionally, it is specified in the protocol that, if the LCID is the first value, it indicates that the content in the MAC PDU is the CCCH and that the capability of the terminal device is temporarily restricted; or if the LCID is the second value, it indicates that the content in the MAC PDU is the CCCH 1 and that the capability of the terminal device is temporarily restricted.

Indication manner 3: The MAC subheader includes a reserved bit and an LCID, where the reserved bit indicates the CCCH or a CCCH 1, and a value of the LCID indicates that the capability of the terminal device is temporarily restricted. The reserved bit may be an R field in the MAC subheader.

A difference between the indication manner 3 and the indication manner 2 lies in that the reserved bit in the MAC subheader is reused to indicate the CCCH or the CCCH 1. For example, if a value of the reserved bit is a first value, the reserved bit indicates the CCCH; or if a value of the reserved bit is a second value, the reserved bit indicates the CCCH 1.

The indication manner 3 may alternatively be understood as follows: If the LCID included in the MAC subheader falls within a preset range, the R field in the MAC subheader indicates the CCCH or the CCCH 1. For example, if a value of the R field is 0, the R field indicates the corresponding CCCH; or if a value of the R field is 1, the R field indicates the corresponding CCCH 1. It should be noted that, if the LCID does not fall within the preset range, the R field in the MAC subheader is still the reserved bit.

Optionally, it is specified in the protocol that the indication of that "the capability of the terminal device is temporarily restricted" takes effect only in an RRC setup process or an RRC resume process. After the RRC setup process is completed (for example, an RRC setup complete message is successfully sent) or the RRC resume process is completed (for example, an RRC resume complete message is successfully sent), the indication of that "the capability of the terminal device is temporarily restricted" no longer takes effect.

Optionally, it is specified in the protocol that the indication of that "the capability of the terminal device is temporarily restricted" takes effect only before the terminal device receives a first RRC reconfiguration message. For example, the indication of that "the capability of the terminal device is temporarily restricted" starts to take effect in the RRC setup process or the RRC resume process until the terminal device receives the first RRC reconfiguration message. The first RRC reconfiguration message may be for enabling/configuring/indicating the terminal device to report a temporary capability by using UAI. Alternatively, the first RRC reconfiguration message may be for enabling/configuring temporary capability restriction. Alternatively, the first RRC reconfiguration message indicates that the terminal device is allowed to report a temporary capability by using a UAI message. Alternatively, the first RRC reconfiguration message indicates that the terminal device is allowed to use a capability restriction mechanism. Alternatively, the first RRC reconfiguration message is for enabling sending of UAI for temporary capability restriction.

Considering that in some application scenarios, an LCID further is required to indicate some content, currently reserved LCID values (namely, an LCID 37 to an LCID 42) may be insufficient. For example, for an enhanced reduced capability (enhanced reduced capability, eRedCap) terminal device, a value of the LCID is required to indicate that a terminal device type is the eRedCap terminal device. For another example, for a terminal device that supports a non-terrestrial network (non-terrestrial network, NTN), a value of the LCID is required to indicate whether a hybrid automatic repeat request (hybrid automatic repeat request, HARQ) feedback of a message 4 (Msg4) is required to be repeated. For another example, if a terminal device is both an MUSIM terminal device and an eRedCap terminal device, in addition to one or two LCID values indicating that a capability of the terminal device is temporarily restricted, a value of the LCID further is required to indicate that a terminal device type is the eRedCap terminal device. Similarly, if a terminal device supports an NTN, and the terminal device is an MUSIM terminal device, in addition to one or two LCID values indicating that a capability of the terminal device is temporarily restricted, a value of the LCID further is required to indicate whether a HARQ feedback of a Msg4 is required to be repeated. For another example, if a terminal device supports an NTN, and the terminal device is an eRedCap terminal device and an MUSIM terminal device, in addition to one or two LCID values indicating that a capability of the terminal device is temporarily restricted, a value of the LCID further is required to indicate that a terminal device type is the eRedCap terminal device, and a value of the LCID further is required to indicate whether a HARQ feedback of a Msg4 is required to be repeated.

For ease of description, in embodiments of this application, content that is required to be indicated by the LCID may be referred to as a characteristic. The foregoing examples are still used. A characteristic 1 may be MUSIM, a characteristic 2 may be eRedCap, and a characteristic 3 may be the NTN; or a characteristic 1 is that "the capability of the terminal device is temporarily restricted", a characteristic 2 is "the eRedCap terminal device type", and a characteristic 3 is "whether a HARQ feedback of a Msg4 is required to be repeated". Based on different application scenarios, one or more LCID values are required to indicate the foregoing one or more characteristics. The one or more characteristics form one characteristic combination. For example, the foregoing three characteristics may form seven characteristic combinations. For example, a characteristic combination 1 is {characteristic 1}, a characteristic combination 2 is {characteristic 2}, a characteristic combination 3 is {characteristic 3}, a characteristic combination 4 is {characteristic 1 and characteristic 2}, a characteristic combination 5 is {characteristic 1 and characteristic 3}, a characteristic combination 6 is {characteristic 2 and characteristic 3}, and a characteristic combination 7 is {characteristic 1, characteristic 2, and characteristic 3}. Based on the different application scenarios, one characteristic combination is indicated based on one or more LCIDs.

More application scenarios may be introduced in the future, and more characteristic combinations are required to be indicated. In this case, the reserved LCID 37 to LCID 42 may be insufficient. Therefore, a method 700 provided in an embodiment of this application is provided. According to the method 700, a small quantity of LCID values can indicate an important/specific characteristic combination or some important/specific characteristic combinations.

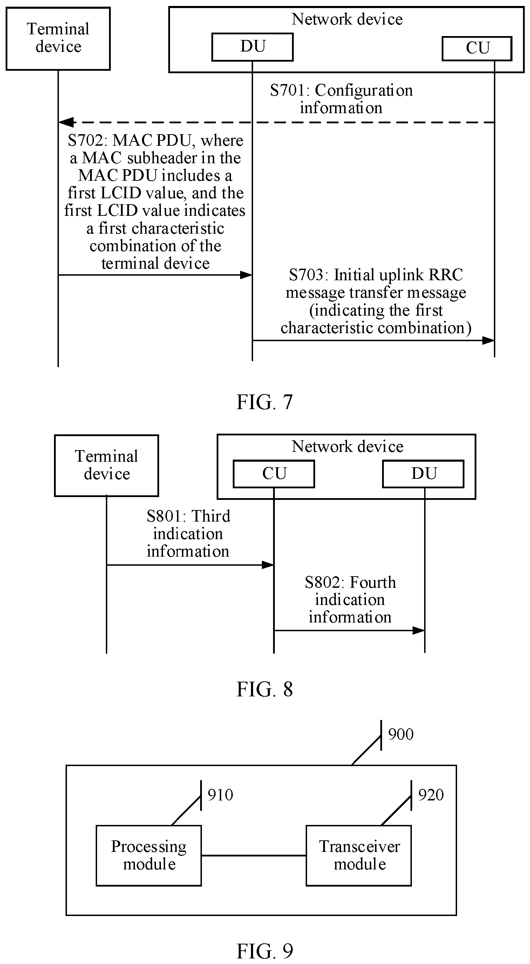

FIG. 7 is a schematic flowchart of a communication method 700 according to an embodiment of this application. In FIG. 7, the method is described from a perspective of interaction between a network device and a terminal device. As shown in FIG. 7, a procedure of the communication method 700 includes the following steps.

S701: The terminal device receives configuration information sent by the network device, where the configuration information indicates a correspondence between at least one LCID value and at least one characteristic combination.

Accordingly, the network device sends the configuration information to the terminal device. The at least one LCID value may one-to-one correspond to the at least one combination. For example, a quantity of the at least one LCID value is the same as a quantity of the at least one combination, and one LCID corresponds to one combination. The network device may indicate the correspondence between the at least one LCID value and the at least one characteristic combination to the terminal device by using the configuration information. Optionally, the configuration information may be carried in an RRC message or a system information (system information, SI) message, or the configuration information is an RRC message or an SI message. The network device may broadcast the configuration information, and any terminal device that receives the configuration information may determine the correspondence between the at least one LCID value and the at least one characteristic combination. Alternatively, the network device may separately send the configuration information to a terminal device, to separately configure the correspondence between the at least one LCID value and the at least one characteristic combination for the terminal device.

Optionally, the at least one LCID value falls within a preset range. The preset range may be predefined in a protocol, or may be configured by the network device. For example, the preset range is [LCID 37 to LCID 42]. In this case, [LCID 37 to LCID 42] may indicate a maximum of six characteristic combinations. If that a CCCH and a CCCH 1 further are required to be distinguished for each characteristic combination is considered, [LCID 37 to LCID 42] may indicate a maximum of three characteristic combinations. It may be understood that, when the CCCH and the CCCH 1 are distinguished, the correspondence between the at least one LCID value and the at least one characteristic combination includes a correspondence between the at least one LCID value, a CCCH type (the CCCH or the CCCH 1), and the at least one characteristic combination.

Considering that a maximum quantity of characteristic combinations that an LCID in the preset range may indicate may be less than a quantity of actual characteristic combinations, a characteristic combination or some characteristic combinations may be incapable of being indicated. Therefore, the network device may define, based on a characteristic supported in a current network, a meaning corresponding to the LCID, and indicate a characteristic combination by indicating the correspondence between the LCID value and the characteristic combination. For ease of understanding, the following provides detailed descriptions by using an example in which the network device currently supports only MUSIM and eRedCap, but does not support an NTN. The following two cases are included. That the network device supports one characteristic may be understood as that the network device supports use of the characteristic or configuration of the characteristic. It may be understood that, if the network device does not support the NTN, an indication related to the NTN is not required to be considered, and a characteristic that is not required to be indicated may not occupy the LCID value.

Case 1: The CCCH or the CCCH 1 is aimed at, or the CCCH and the CCCH 1 are not distinguished.

The correspondence between the at least one LCID value and the at least one characteristic combination includes: The LCID 37 corresponds to a characteristic combination 1 {MUSIM}, the LCID 38 corresponds to a characteristic combination 2 {eRedCap}, and the LCID 39 corresponds to a characteristic combination 1 {MUSIM+eRedCap}.

Case 2: The CCCH and the CCCH 1 are distinguished.

The correspondence between the at least one LCID value and the at least one characteristic combination includes the correspondence between the at least one LCID value, the CCCH type (the CCCH or the CCCH 1), and the at least one characteristic combination.

For example, the correspondence between the at least one LCID value and the at least one characteristic combination includes: The LCID 37 corresponds to a CCCH-based characteristic combination 1 {MUSIM}, the LCID 38 corresponds to a CCCH 1-based characteristic combination 1 {MUSIM}, the LCID 39 corresponds to a CCCH-based characteristic combination 2 {eRedCap}, the LCID 40 corresponds to a CCCH 1-based characteristic combination 2 {eRedCap}, the LCID 41 corresponds to a CCCH-based characteristic combination 1 {MUSIM+eRedCap}, and the LCID 42 corresponds to a CCCH 1-based characteristic combination 1 {MUSIM+eRedCap}.

It can be learned from the case 1 and the case 2 that a smaller quantity of LCID values can indicate more characteristics. For example, in the case 1, only three LCID values may indicate characteristics included in three characteristic combinations.

S702: The terminal device sends a MAC PDU to the network device, where a MAC subheader in the MAC PDU includes a first LCID value, and the first LCID value indicates a first characteristic combination of the terminal device.

A characteristic included in the first characteristic combination is required to be notified by the terminal device to the network device. In this embodiment of this application, the MAC subheader included in the MAC PDU may indicate the first characteristic combination. For example, the MAC subheader in the MAC PDU includes the first LCID value, and the first LCID value indicates the first characteristic combination of the terminal device. It may be understood that the correspondence between the at least one LCID value and the at least one characteristic combination includes a correspondence between the first LCID value and the first characteristic combination. The network device receives the MAC PDU, and may determine the first characteristic combination based on the foregoing configuration information and the first LCID value carried in the MAC subheader in the MAC PDU.

For example, in the configuration information, the correspondence between the at least one LCID value and the at least one characteristic combination includes: The LCID 37 corresponds to the characteristic combination 1 {MUSIM}, the LCID 38 corresponds to the characteristic combination 2 {eRedCap}, and the LCID 39 corresponds to the characteristic combination 3 {MUSIM+eRedCap}. When the terminal device is both an MUSIM terminal device and an eRedCap terminal device, the first characteristic combination is the characteristic combination 3. The terminal device is required to indicate that "a capability of the terminal device is temporarily restricted" and an "eRedCap terminal device type". In this case, the terminal device determines that the first LCID value is the LCID 39, and the LCID value included in the MAC subheader in the MAC PDU is 39, to indicate that "the capability of the terminal device is temporarily restricted" and the "eRedCap terminal device type".

For another example, in the configuration information, the correspondence between the at least one LCID value and the at least one characteristic combination includes: The LCID 37 corresponds to the CCCH-based characteristic combination 1 {MUSIM}, the LCID 38 corresponds to the CCCH 1-based characteristic combination 1 {MUSIM}, the LCID 39 corresponds to the CCCH-based characteristic combination 2 {eRedCap}, the LCID 40 corresponds to the CCCH 1-based characteristic combination 2 {eRedCap}, the LCID 41 corresponds to the CCCH-based characteristic combination 3 {MUSIM+eRedCap}, and the LCID 42 corresponds to the CCCH 1-based characteristic combination 3 {MUSIM+eRedCap}. When the terminal device is both an MUSIM terminal device and an eRedCap terminal device, the terminal device is required to indicate that "a capability of the terminal device is temporarily restricted" and an "eRedCap terminal device type" and indicate that a sent message is carried on the CCCH 1. In this case, the first characteristic combination is the CCCH 1-based characteristic combination 3. In this case, the terminal device determines that the first LCID value is the LCID 42, and the LCID value included in the MAC subheader in the MAC PDU is 42, to indicate that "the capability of the terminal device is temporarily restricted" and the "eRedCap terminal device type" and correspond to the CCCH 1.

In the case 2, although the CCCH and the CCCH 1 may be distinguished by using the value of the LCID, a quantity of characteristic combinations that can be indicated by a same quantity of LCID values decreases.

Therefore, an alternative solution is proposed. In this solution, a reserved bit (an R field) in the MAC subheader indicates the CCCH or the CCCH 1, and the first LCID value carried in the MAC subheader indicates the first characteristic combination. For example, the MAC subheader includes the reserved bit, where if a value of the reserved bit is a first value, the reserved bit indicates the CCCH; or if a value of the reserved bit is a second value, the reserved bit indicates the CCCH 1. For example, the LCID value included in the MAC subheader falls within the preset range. If a value of the R field is 0, the R field indicates the corresponding CCCH; or if a value of the R field is 1, the R field indicates the corresponding CCCH 1. It should be noted that, if the LCID value does not fall within the preset range, the R field included in the MAC subheader is still the reserved bit.

For example, in the configuration information, the correspondence between the at least one LCID value and the at least one characteristic combination includes: The LCID 37 corresponds to the characteristic combination 1 {MUSIM}, the LCID 38 corresponds to the characteristic combination 2 {eRedCap}, and the LCID 39 corresponds to the characteristic combination 1 {MUSIM+eRedCap}. If the terminal device is both the MUSIM terminal device and the eRedCap terminal device, the terminal device is required to indicate that "the capability of the terminal device is temporarily restricted" and the "eRedCap terminal device type". In this case, the first LCID value is the LCID 39, and the LCID value included in the MAC subheader in the MAC PDU is 39. If the sent message is carried on the CCCH 1, the value of the R field in the MAC subheader in the MAC PDU is 1, to indicate that "the capability of the terminal device is temporarily restricted" and the "eRedCap terminal device type" and correspond to the CCCH 1.

In the method 700, that the correspondence between the at least one LCID value and the at least one characteristic combination is configured by the network device is used as an example. In a possible implementation, the correspondence between the at least one LCID value and the at least one characteristic combination may alternatively be predefined in a protocol. In this case, S701 may not be performed, is an optional step, and is shown by using a dashed line in FIG. 7.

When the correspondence between the at least one LCID value and the at least one characteristic combination is predefined in the protocol, this is also applicable to the foregoing case 1 and case 2. The terminal device indicates the first characteristic combination of the terminal device by using the first LCID value included in the MAC subheader in the MAC PDU. Details are not described herein again. Alternatively, the terminal device may indicate the CCCH or the CCCH 1 by using the reserved bit (the R field) in the MAC subheader, and indicate the first characteristic combination by using the first LCID value carried in the MAC subheader. For details, refer to the foregoing content. Details are not described herein again.

In a CU-DU architecture, an RRC resume message is generated by a CU. If the CU does not know that "the capability of the terminal device is temporarily restricted", a configuration carried in the RRC resume message generated by the CU may exceed a current capability of the terminal device. Therefore, a DU may indicate, to the CU, that the capability of the terminal device is temporarily restricted. For example, in S602, that the terminal device sends the MAC PDU to the network device may be that the terminal device sends the MAC PDU to the DU, and the DU determines, in the MAC subheader in the MAC PDU, information which is that "the capability of the terminal device is temporarily restricted", and notifies the CU. For another example, in S702, that the terminal device sends the MAC PDU to the network device may be that the terminal device sends the MAC PDU to the DU, and the DU determines, in the MAC subheader in the MAC PDU, information which is that "the capability of the terminal device is temporarily restricted", and notifies the CU.

In the method 600, the DU may indicate, by using a first message sent to the CU, that the capability of the terminal device is temporarily restricted. For example, the first message may include a first indication field, and the first indication field indicates that the capability of the terminal device is temporarily restricted. If the first message does not include a first indication field, it indicates that the capability of the terminal device is not temporarily restricted. For another example, the first message includes a first indication field, and the first indication field occupies at least one bit. When a value of the first indication field is a first value, it indicates that the capability of the terminal device is temporarily restricted; or when a value of the first indication field is a second value, it indicates that the capability of the terminal device is not temporarily restricted.

In the method 700, the DU may indicate the first characteristic combination by using a first message sent to the CU. For example, the first message may include a first indication field, and the first indication field occupies at least one bit. When a value of the first indication field is a first value, the first indication field indicates the first characteristic combination; or when a value of the first indication field is a second value, the first indication field indicates a second characteristic combination. The rest may be deduced by analogy.

Optionally, when the first characteristic combination includes MUSIM or that "the capability of the terminal device is temporarily restricted", the DU indicates the first characteristic combination by using the first message sent to the CU, or the DU directly indicates, by using the first message sent to the CU, that the capability of the terminal device is temporarily restricted. The first message may include the first indication field, and the first indication field indicates that the capability of the terminal device is temporarily restricted. If the first message does not include the first indication field, it indicates that the capability of the terminal device is not temporarily restricted. For another example, the first message includes the first indication field, and the first indication field occupies the at least one bit. When the value of the first indication field is the first value, it indicates that the capability of the terminal device is temporarily restricted; or when the value of the first indication field is the second value, it indicates that the capability of the terminal device is not temporarily restricted.

Optionally, an initial uplink RRC message transfer (initial UL RRC message transfer) message may be reused for the first message, as shown in S603/S703. Alternatively, the first message may be another possible message.

It should be noted that S603/S703 exists only in the CU-DU architecture. If the network device is not in the CU-DU architecture, S603/S703 does not exist.

It is considered that, in the CU-DU architecture, the CU generates an RRC reconfiguration message, and the DU schedules information transmission of the terminal device. For example, the DU configures, for the terminal device, a resource for data transmission. If the DU does not know that "the capability of the terminal device is temporarily restricted", a scheduling configuration configured by the DU for the terminal device may exceed the current capability of the terminal device. For example, the capability of the terminal device includes a supported MIMO layer quantity. The capability of the terminal device is not temporarily restricted, and the MIMO layer quantity that can be supported by the terminal device is 4. Because the capability is temporarily restricted, a MIMO layer quantity currently supported by the terminal device is 1. The DU does not know that "the capability of the terminal device is temporarily restricted", and may schedule the terminal device based on the MIMO layer quantity that is 4. Because the terminal device cannot support transmission at four MIMO layers, data is lost.

Therefore, to enable the terminal device to normally perform data transmission, the CU may indicate, to the DU, that the capability of the terminal device is temporarily restricted. For example, the terminal device sends an RRC message to the CU in the network device, where the RRC message indicates that the capability of the terminal device is restricted. The CU determines, based on the RRC message, that the capability of the terminal device is restricted, and sends a second message to the DU, where the second message indicates that the capability of the terminal device is restricted.

FIG. 8 is an example of a schematic flowchart of a communication method 800 according to an embodiment of this application. In FIG. 8, the method is described from a perspective of interaction between a network device and a terminal device. As shown in FIG. 8, a procedure of the communication method 800 includes the following steps.

S801: The terminal device sends third indication information to a CU, where the third indication information indicates that a capability of the terminal device is temporarily restricted.

Accordingly, the CU receives the third indication information from the terminal device. That the third indication information indicates that the capability of the terminal device is temporarily restricted may be replaced with the following: The third indication information indicates that the capability of the terminal device is restricted, or the third indication information indicates that the terminal device is a terminal device whose capability is restricted.

The third indication information may be carried in one or more of an RRC setup complete message, an RRC resume request message, or an RRC resume complete message.

Optionally, the third indication information may further indicate a specific capability parameter set corresponding to a current capability of the terminal device. The specific capability parameter set may be defined in a protocol.

S802: The CU sends fourth indication information to a DU, where the fourth indication information indicates that the capability of the terminal device is temporarily restricted.

Accordingly, the DU receives the fourth indication information from the CU. That the fourth indication information indicates that the capability of the terminal device is temporarily restricted may be replaced with the following: The fourth indication information indicates that the capability of the terminal device is restricted, or the fourth indication information indicates that the terminal device is the terminal device whose capability is restricted.

The fourth indication information may be carried in a downlink (downlink, DL) RRC message transfer (DL RRC message transfer) message. For example, an indication field may be newly added to the DL RRC message transfer message, and the indication field indicates that the capability of the terminal device is temporarily restricted. For example, if the DL RRC message transfer message includes the indication field, it indicates that the capability of the terminal device is temporarily restricted; or if the DL RRC message transfer message does not include the indication field, it indicates that the capability of the terminal device is not temporarily restricted. For another example, if a value of the indication field is a first value, it indicates that the capability of the terminal device is temporarily restricted; or if a value of the indication field is a second value, it indicates that the capability of the terminal device is not temporarily restricted.

In the method 800, the CU determines, based on the third indication information, that the capability of the terminal device is temporarily restricted, and indicates, to the DU by using the fourth indication information, that the capability of the terminal device is temporarily restricted, so that the DU can appropriately schedule the terminal device.

For a terminal device for which a temporary capability restriction mechanism is enabled, when the terminal device is in an RRC connected state, and a capability of the terminal device changes, the terminal device may indicate a current temporary capability to a network device, to indicate that the capability of the terminal device is updated to the temporary capability. The terminal device may indicate, in a proactive manner, that the capability of the terminal device is updated to the temporary capability, or may indicate, in a reactive manner, that the capability of the terminal device is updated to the temporary capability.

Indicating the temporary capability of the terminal device in the proactive (proactive) manner means that the terminal device notifies the network device of the updated temporary capability of the terminal device in advance, and the network device configures a related parameter for the terminal device based on the temporary capability of the terminal device, so that a configuration of the terminal device does not exceed the current capability of the terminal device. In the proactive manner, the configuration sent by the network device to the terminal device does not exceed the current capability of the terminal device. Indicating the temporary capability of the terminal device in the reactive (reactive) manner means that the terminal device notifies the network device of the updated temporary capability of the terminal device only when the terminal device finds that a current configuration exceeds the current temporary capability, so that the network device reconfigures a related parameter for the terminal device based on the current temporary capability of the terminal device, so that a configuration of the terminal device does not exceed the current capability of the terminal device.

In the proactive manner, the terminal device is required to reserve some capabilities in advance, to be capable of notifying the network device of the temporary capability of the terminal device in advance. Therefore, it is possible that a capability currently actually used by the terminal device is not all the reserved capabilities. That is, in the proactive manner, some reserved capabilities are not used temporarily. As a result, a system cannot reach a peak rate. In the reactive manner, because the network device does not learn of the restricted capability of the terminal device in advance, a configuration sent by the network device to the terminal device may exceed the current capability of the terminal device. Consequently, reconfiguration is required, and signaling overheads are increased. The terminal device may be incapable of satisfying an actual requirement of the network device in the proactive manner or the reactive manner. For example, if the actual requirement of the network device is that a higher system rate and higher system performance are more important, the terminal device cannot satisfy the actual requirement of the network device in the reactive manner. If the actual requirement of the network device is reducing the signaling overheads and avoiding an unnecessary reconfiguration message, the terminal device cannot satisfy the actual requirement of the network device in the proactive manner.

Therefore, an embodiment of this application provides a solution. In this solution, a network device indicates a manner used by a terminal device to indicate/report a current temporary capability of the terminal device, to satisfy an actual requirement of the network device.

For example, the network device may send fifth indication information to the terminal device. Accordingly, the terminal device receives the fifth indication information sent by the network device. The fifth indication information may indicate a manner in which the terminal device indicates the temporary capability. After receiving the fifth indication information sent by the network device, the terminal device uses the corresponding manner based on the fifth indication information to indicate the temporary capability. Indicating the temporary capability may be replaced with indicating that the temporary capability is restricted or that the temporary capability is updated. That "the terminal device indicates the temporary capability" means that the terminal device indicates the temporary capability by using a UAI message.

That the fifth indication information indicates a manner in which the terminal device indicates the temporary capability by using the UAI message includes: The fifth indication information indicates whether the terminal device is allowed to indicate the temporary capability in a proactive manner and/or a reactive manner. That is, the fifth indication information indicates whether the terminal device is allowed to use the proactive manner or the reactive manner, or the fifth indication information indicates whether the terminal device is allowed to use the proactive manner and the reactive manner. For example, the fifth indication information indicates that the terminal device is allowed to use the proactive manner or the reactive manner, or the fifth indication information indicates that the terminal device is allowed to use the proactive manner and the reactive manner. For example, the fifth indication information indicates that the terminal device is not allowed to use the proactive manner or the reactive manner, or the fifth indication information indicates that the terminal device is not allowed to use the proactive manner and the reactive manner.

Optionally, when the network device does not allow the terminal device to report the temporary capability in the proactive manner or the reactive manner, the network device may indicate that the terminal device is not allowed to indicate the temporary capability. The terminal device is allowed to use neither the proactive manner nor the reactive manner.

The fifth indication information may be carried in an RRC reconfiguration message. For example, the fifth indication information may be carried in an other configuration (otherconfig) field in the RRC reconfiguration message. Optionally, that the network device allows the terminal to indicate the temporary capability may be implicitly indicated in a proactive manner and/or a reactive manner indicated by the network device.

Embodiments provided in embodiments of this application may be separately performed, or may be combined with each other. In embodiments provided in this application, the methods provided in embodiments of this application are separately described from a perspective of interaction between the terminal device and the network device (involving the source network device and/or the target network device). The steps performed by the terminal device may be implemented by different functional entities included in the terminal device. The steps performed by the network device may be implemented by different functional entities included in the network device. For example, the network device may be in the CU-DU architecture, the CU may generate the RRC resume message, and the DU may send the RRC resume message. To implement functions in the methods provided in the foregoing embodiments of this application, the terminal device and the network device may include a hardware structure and/or a software module, and the foregoing functions are implemented in a form of a hardware structure, a software module, or a combination of the hardware structure and the software module. Whether a function in the foregoing functions is performed by using the hardware structure, the software module, or the combination of the hardware structure and the software module depends on particular applications and design constraint conditions of the technical solutions.

The following describes, with reference to the accompanying drawings, communication apparatuses for implementing the foregoing methods in embodiments of this application. Therefore, all the foregoing content may be used in the following embodiments. Repeated content is not described again.

FIG. 9 is a schematic block diagram of a communication apparatus 900 according to an embodiment of this application. The communication apparatus 900 may be the network device or the terminal device in the foregoing embodiments. For example, the communication apparatus 900 may be the network device or the terminal device in FIG. 1. Alternatively, the communication apparatus 900 is a chip (system) in the network device or a chip (system) in the terminal device. Alternatively, the communication apparatus 900 is a software module in the network device or the terminal device. The communication apparatus 900 may correspondingly implement functions or steps implemented by the terminal device or the network device in the foregoing method embodiments. The communication apparatus 900 may include a processing module 910 and a transceiver module 920. Optionally, a storage module may further be included. The storage module may be configured to store instructions (code or a program) and/or data. The storage module may be, for example, a memory. The processing module 910 and the transceiver module 920 may be coupled to the storage module. For example, the processing module 910 may read the instructions (the code or the program) and/or the data in the storage module, to implement the corresponding methods. When the communication apparatus 900 is the chip in the terminal device, the storage module may be a storage module in the chip, for example, a register or a cache. For example, the storage module may alternatively be a storage module that is in the network device/terminal device and that is located outside the chip, for example, a read-only memory (read-only memory, ROM), another type of static storage device that can store static information and instructions, or a random access memory (random access memory, RAM). The foregoing units may be independently disposed, or may be partially or completely integrated.

In a possible implementation, the processing module 910 may be a processor or a controller, for example, may be a general-purpose central processing unit (central processing unit, CPU), a general-purpose processor, a digital signal processor (digital signal processing, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The transceiver module 920 is a transceiver, an interface circuit, a bus, a pin, or another possible communication interface, and is configured to receive a signal from another apparatus. For example, when the apparatus is implemented in a form of a chip, the transceiver module 920 is an interface circuit used by the chip to receive a signal from another chip or apparatus, or is an interface circuit used by the chip to send a signal to another chip or apparatus.

In some possible implementations, the communication apparatus 900 can correspondingly implement the behavior and the function of the terminal device in the foregoing method embodiments. The communication apparatus 900 may be a terminal device, may be a component (for example, a chip or a circuit) used in the terminal device, may be a chip or a chip group in the terminal device or a part that is of the chip and that is configured to perform a related method function, or may be a software module that can implement the method performed by the terminal device in the foregoing methods (for example, any method in the method 300 to the method 600). This is not limited.

For example, the communication apparatus 900 implements the method performed by the terminal device in the embodiment in FIG. 3. The transceiver module 920 may be configured to perform S301 to S303 in the embodiment shown in FIG. 3, and/or configured to support another process of the technology described in this specification. The processing module 910 may be configured to perform another process of the technology described in this specification.

In a possible implementation, the transceiver module 920 is configured to receive first information and second information, where the first information indicates the communication apparatus 900 to report a measurement gap requirement, the second information is for enabling the communication apparatus 900 to report a temporary capability by using a UAI message, the temporary capability includes the measurement gap requirement, and the measurement gap requirement indicates whether a measurement gap is required. The processing module 910 is configured to determine that the communication apparatus 900 has not reported the measurement gap requirement or that a first measurement gap requirement is different from a last reported measurement gap requirement. The transceiver module 920 is further configured to send the first measurement gap requirement, where the first measurement gap requirement is a current measurement gap requirement of the communication apparatus 900.

In an optional implementation, the first information is carried in an RRC reconfiguration message or an RRC resume message; and the first measurement gap requirement is carried in an RRC reconfiguration complete message, an RRC resume complete message, or the UAI message.

In an optional implementation, the last reported measurement gap requirement is: a last reported measurement gap requirement in measurement gap requirements in the RRC reconfiguration complete message and the UAI message; or a last reported measurement gap requirement in measurement gap requirements in the RRC reconfiguration complete message, the RRC resume complete message, and the UAI message.

In an optional implementation, the first information includes filtering information, the filtering information indicates a target band for which the communication apparatus 900 is requested to report the measurement gap requirement, the first measurement gap requirement is carried in the UAI message, and the first measurement gap requirement corresponds to the target band.

In an optional implementation, after the transceiver module 920 sends the first measurement gap requirement, the processing module 910 is further configured to start a timer, where in a running process of the timer, the communication apparatus is prohibited from reporting the measurement gap requirement by using the UAI message.

In an optional implementation, the communication apparatus 900 is handed over from a source network device to a target network device, and the communication apparatus 900 has sent a first UAI message in a first time period before receiving a handover instruction; and the transceiver module 920 is further configured to send a second UAI message to the target network device, where when the first measurement gap requirement is carried in the first UAI message, the second UAI message includes a second measurement gap requirement, and the second measurement gap requirement is a current measurement gap requirement of the communication apparatus 900; or when the first measurement gap requirement is carried in the RRC reconfiguration complete message, second UAI includes no measurement gap requirement.

For example, the communication apparatus 900 implements the method performed by the terminal device in the embodiment in FIG. 4. The transceiver module 920 may be configured to perform S401 to S403 in the embodiment shown in FIG. 4, and/or configured to support another process of the technology described in this specification. The processing module 910 may be configured to perform another process of the technology described in this specification.

In a possible implementation, the transceiver module 920 is configured to send a first RRC reconfiguration complete message and a first UAI message, where the first RRC reconfiguration complete message includes a first measurement gap requirement, and the first UAI message includes a second measurement gap requirement. When the communication apparatus 900 is handed over from a source network device to a target network device, the transceiver module 920 is further configured to send a current measurement gap requirement to the target network device.

In an optional implementation, the current measurement gap requirement is carried in a second RRC reconfiguration complete message or a second UAI message.

In an optional implementation, when the communication apparatus 900 initiates transmission of a UAI message in a first time period before receiving a handover instruction, and the communication apparatus 900 is handed over from the source network device to the target network device, and sends the current measurement gap requirement to the target network device by using the second RRC reconfiguration complete message, the transceiver module 920 is further configured to send a third UAI message to the target network device, where the third UAI message does not include the current measurement gap requirement.

For example, the communication apparatus 900 implements the method performed by the source network device in the embodiment in FIG. 5. The transceiver module 920 may be configured to perform S501 to S503 in the embodiment shown in FIG. 5, and/or configured to support another process of the technology described in this specification. The processing module 910 may be configured to perform another process of the technology described in this specification.

In a possible implementation, the transceiver module 920 is configured to: receive a first measurement gap requirement and a second measurement gap requirement from a terminal device, and send the second measurement gap requirement to a target network device, where the second measurement gap requirement is different from the first measurement gap requirement, the second measurement gap requirement is a last reported measurement gap requirement, and a message carrying the second measurement gap requirement is different from a message carrying the first measurement gap requirement.

In an optional implementation, the last reported measurement gap requirement is: a last reported measurement gap requirement in measurement gap requirements in a radio resource control RRC reconfiguration complete message and a user equipment assistance information UAI message; or a last reported measurement gap requirement in measurement gap requirements in an RRC reconfiguration complete message, an RRC resume complete message, and a UAI message.

In an optional implementation, the second measurement gap requirement sent to the target network device is carried in a handover preparation information message, and the handover preparation information message includes first indication information and second indication information; and the first indication information is measurement gap requirement information, and the second indication information is UAI. When the second measurement gap requirement of the terminal device is carried in an RRC message, the first indication information indicates the second measurement gap requirement. When the second measurement gap requirement of the terminal device is carried in the UAI message, the second indication information indicates the second measurement gap requirement.

In an optional implementation, the second measurement gap requirement sent to the target network device is carried in a handover preparation information message, and the handover preparation information message includes first indication information and second indication information; and the first indication information or the second indication information indicates the second measurement gap requirement, the first indication information is measurement gap requirement information, and the second indication information is UAI.

In an optional implementation, the second measurement gap requirement sent to the target network device is carried in a handover preparation information message, and the handover preparation information message includes first indication information and second indication information; and both the first indication information and the second indication information indicate the second measurement gap requirement, the first indication information is measurement gap requirement information, and the second indication information is UAI.

For example, the communication apparatus 900 implements the method performed by the terminal device in the embodiment in FIG. 6. The processing module 910 may be configured to perform S601 in the embodiment shown in FIG. 6, and configured to perform another process of the technology described in this specification. The transceiver module 920 may be configured to perform S602 in the embodiment shown in FIG. 6, and/or configured to support another process of the technology described in this specification.

The processing module 910 is configured to generate a MAC PDU, where the MAC PDU includes an RRC resume request message, the MAC PDU further includes a MAC subheader, and the MAC subheader indicates that a capability of the terminal device is restricted. The transceiver module 920 is configured to send the MAC PDU.

In an optional implementation, that the MAC subheader indicates that the capability of the terminal device is restricted includes: The MAC subheader includes a reserved bit, where a value of the reserved bit is a first value, to indicate that the capability of the terminal device is restricted.

In an optional implementation, that the MAC subheader indicates that the capability of the terminal device is restricted includes: The MAC subheader includes an LCID, where a value of the LCID indicates that the capability of the terminal device is restricted.

In an optional implementation, the MAC subheader includes a reserved bit and an LCID, where the reserved bit indicates a CCCH or a CCCH 1, and a value of the LCID indicates that the capability of the terminal device is temporarily restricted.

In an optional implementation, the indication of that the capability of the communication apparatus 900 is restricted takes effect in an RRC setup process or an RRC resume process.

For example, the communication apparatus 900 implements the method performed by the terminal device in the embodiment in FIG. 7. The processing module 910 may be configured to perform another process of the technology described in this specification. The transceiver module 920 may be configured to perform S701 and S702 in the embodiment shown in FIG. 7, and/or configured to support another process of the technology described in this specification.

The transceiver module 920 is configured to: receive configuration information sent by a network device, where the configuration information indicates a correspondence between at least one LCID value and at least one characteristic combination; and send a MAC PDU to the network device, where a MAC subheader in the MAC PDU includes a first LCID value, and the first LCID value indicates a first characteristic combination of the terminal device. The processing module 910 may be configured to generate the MAC PDU.

In an optional implementation, the correspondence between the at least one LCID value and the at least one characteristic combination includes a correspondence between the at least one LCID value, a CCCH type (a CCCH or a CCCH 1), and the at least one characteristic combination.

In an optional implementation, the MAC subheader includes a reserved bit, a value of the reserved bit is a first value, and a message that the MAC subheader indicates to send is carried on the CCCH or the CCCH 1.

For example, the communication apparatus 900 implements the method performed by the network device in the embodiment in FIG. 7. The processing module 910 may be configured to perform another process of the technology described in this specification. The transceiver module 920 may be configured to perform S701 and S702 in the embodiment shown in FIG. 7, and/or configured to support another process of the technology described in this specification.

The transceiver module 920 is configured to: send configuration information, where the configuration information indicates a correspondence between at least one LCID value and at least one characteristic combination; and receive a MAC PDU sent by a terminal device, where a MAC subheader in the MAC PDU includes a first LCID value, and the first LCID value indicates a first characteristic combination of the terminal device. The processing module 910 may be configured to generate the MAC PDU.

In an optional implementation, the MAC subheader includes a reserved bit, a value of the reserved bit is a first value, and a message that the MAC subheader indicates to send is carried on a CCCH or a CCCH 1.

For example, the communication apparatus 900 implements the method performed by the terminal device in the embodiment in FIG. 8. The processing module 910 may be configured to perform another process of the technology described in this specification. The transceiver module 920 may be configured to perform S801 and S802 in the embodiment shown in FIG. 8, and/or configured to support another process of the technology described in this specification.

The transceiver module 920 is configured to send third indication information to a CU, where the third indication information indicates that a capability of the terminal device is temporarily restricted.

In an optional implementation, the third indication information may be carried in one or more of an RRC setup complete message, an RRC resume request message, or an RRC resume complete message.

For example, the communication apparatus 900 implements the method performed by the CU in the network device in the embodiment in FIG. 8. The processing module 910 may be configured to perform another process of the technology described in this specification. The transceiver module 920 may be configured to perform S801 and S802 in the embodiment shown in FIG. 8, and/or configured to support another process of the technology described in this specification.

The transceiver module 920 is configured to: receive third indication information from a terminal device, where the third indication information indicates that a capability of the terminal device is temporarily restricted; and send fourth indication information to a DU, where the fourth indication information indicates that the capability of the terminal device is temporarily restricted.

In an optional implementation, the third indication information may be carried in one or more of an RRC setup complete message, an RRC resume request message, or an RRC resume complete message.

In an optional implementation, the fourth indication information may be carried in a DL RRC message transfer message.

When the communication apparatus 900 is a chip-type apparatus or circuit, the transceiver module may be an input/output circuit and/or a communication interface, and the processing module is an integrated processor, a microprocessor, or an integrated circuit.

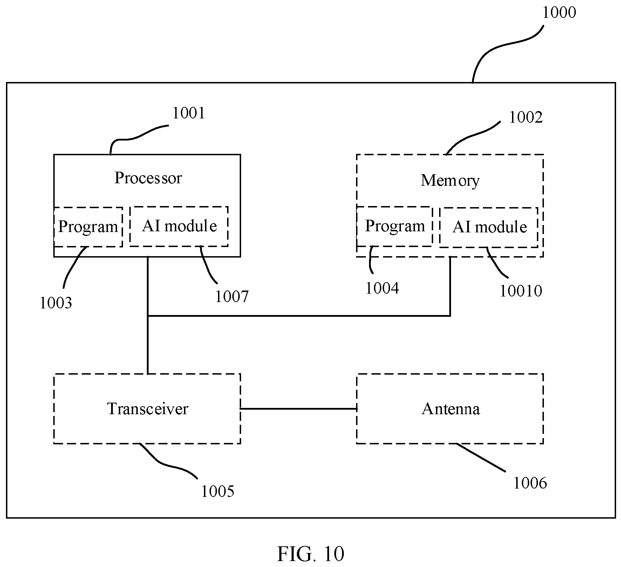

FIG. 10 is a schematic block diagram of a communication apparatus 1000 according to an embodiment of this application. The communication apparatus 1000 may be the network device or the terminal device in the foregoing embodiments. For example, the communication apparatus 1000 may be the network device or the terminal device in FIG. 1. Alternatively, the communication apparatus 1000 is a chip (system) in the network device or the terminal device. In this embodiment of this application, the chip system may include a chip, or may include the chip and another discrete device. For a specific function, refer to the descriptions of the foregoing method embodiments.

The communication apparatus 1000 includes one or more processors 1001, configured to implement or support the communication apparatus 1000 in implementing the function of the terminal device or the network device in the methods provided in embodiments of this application. For details, refer to the detailed descriptions in the method example. Details are not described herein again. The processor 1001 may also be referred to as a processing unit or a processing module, and may implement a specific control function. The processor 1001 may be a general-purpose processor, a dedicated processor, or the like, for example, includes a baseband processor, a central processing unit, an application processor, a modem processor, a graphics processing unit, an image signal processor, a digital signal processor, a video codec processor, a controller, a memory, and/or a neural network processor. The baseband processor may be configured to process a communication protocol and communication data. The central processing unit may be configured to: control the communication apparatus 1000 (for example, a network apparatus or a terminal apparatus), execute a software program, and/or process data. Different processors may be independent devices, or may be integrated into one or more processors, for example, integrated into one or more application-specific integrated circuits.

In a design, the processor 1001 may include a program 1003 (which may sometimes also be referred to as code or instructions). The program 1003 may be run on the processor 1001, to enable the communication apparatus 1000 to perform the method described in the following embodiments. In another possible design, the communication apparatus 1000 includes a circuit (not shown in FIG. 10), and the circuit is configured to implement the function of the network device or the terminal device in the foregoing embodiments.

In a design, the communication apparatus 1000 may include one or more memories 1002 that store a program 1004 (which may sometimes also be referred to as code or instructions). The program 1004 may be run on the processor 1001, so that the communication apparatus 1000 performs the methods described in the foregoing method embodiments, for example, the procedure shown in one or more of FIG. 3, FIG. 4, FIG. 5, FIG. 6, FIG. 7, and FIG. 8.

In a design, the processor 1001 and/or the memory 1002 may include an artificial intelligence (artificial intelligence, AI) module 1007 and an AI module 10010. The AI module is configured to implement an Al-related function. The AI module may be implemented by using software, hardware, or a combination of the software and the hardware. For example, the AI module may include a RAN intelligent controller (RAN intelligent controller, RIC) module. For example, the AI module may be a near-real-time RIC or a non-real-time RIC.

In a possible design, the processor 1001 and/or the memory 1002 may further store data. The processor and the memory may be separately disposed, or may be integrated together.

In a possible design, the communication apparatus 1000 may further include a transceiver 1005 and/or an antenna 1006. The processor 1001 may sometimes also be referred to as a processing unit, and controls the communication apparatus 1000. The transceiver 1005 may sometimes also be referred to as a transceiver unit, a transceiver circuit, or the like, and is configured to implement a transceiver function of the communication apparatus through the antenna 1006.

In a possible design, the communication apparatus 1000 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 1000 may include more or fewer components, some components are integrated, or some components are split. The components may be implemented by hardware, software, or a combination of the software and the hardware.

The communication apparatus in the foregoing embodiments may be a terminal device (or a network device), may be a circuit, or may be a chip used in the terminal device (or the network device), or another combined device, component, or the like that has a function of the terminal device (or the network device). When the communication apparatus is the terminal device (or the network device), the transceiver module may be a transceiver, and may include an antenna, a radio frequency circuit, and the like, and the processing module may be a processor, for example, a CPU. When the communication apparatus is the component having the function of the terminal device (or the network device), the transceiver module may be a radio frequency unit, and the processing module may be the processor. When the communication apparatus is a chip system, the communication apparatus may be an FPGA, a dedicated ASIC, a system on a chip (system on a chip, SoC), a CPU, a network processor (network processor, NP), a DSP, a micro controller unit (micro controller unit, MCU), a programmable controller (programmable logic device, PLD), or another integrated chip. The processing module may be a processor of the chip system. The transceiver module or a communication interface may be an input/output interface or an interface circuit of the chip system. For example, the interface circuit may be a code/data read/write interface circuit. The interface circuit may be configured to: receive code instructions (where the code instructions are stored in a memory, and may be directly read from the memory, or may be read from the memory through another device), and transmit the code instructions to the processor. The processor may be configured to run the code instructions, to perform the methods in the foregoing method embodiments. For another example, the interface circuit may alternatively be a signal transmission interface circuit between a communication processor and the transceiver.

An embodiment of this application further provides a communication system. Specifically, the communication system includes a network device and a terminal device. For example, the communication system includes a terminal device and a network device that are configured to implement related functions in FIG. 3. Alternatively, the communication system includes a terminal device and a network device that are configured to implement related functions in FIG. 4. Alternatively, the communication system includes a terminal device and a network device that are configured to implement related functions in FIG. 5. Alternatively, the communication system includes a terminal device and a network device that are configured to implement related functions in FIG. 6. Alternatively, the communication system includes a terminal device and a network device that are configured to implement related functions in FIG. 7. Alternatively, the communication system includes a terminal device and a network device that are configured to implement related functions in FIG. 8. For details, refer to the related descriptions in the foregoing method embodiments. Details are not described herein again.

An embodiment of this application further provides a computer-readable storage medium, including instructions. When the instructions are run on a computer, the computer is enabled to perform the methods performed by the terminal device or the network device in FIG. 3, FIG. 4, FIG. 5, FIG. 6, FIG. 7, and FIG. 8.

An embodiment of this application further provides a computer program product, including instructions. When the instructions are run on a computer, the computer is enabled to perform the methods performed by the terminal device or the network device in FIG. 3, FIG. 4, FIG. 5, FIG. 6, FIG. 7, and FIG. 8.

An embodiment of this application provides a chip system. The chip system includes a processor, may further include a memory, and is configured to implement a function of the terminal apparatus or the network apparatus in the foregoing methods. The chip system may include a chip, or may include the chip and another discrete device.

To implement the functions of the communication apparatuses in FIG. 9 and FIG. 10, an embodiment of this application further provides a chip, including a processor, configured to support the communication apparatus in implementing the functions of the terminal device or the network device in the foregoing method embodiments. In a possible design, the chip is connected to a memory, or the chip includes a memory. The memory is configured to store a computer program or instructions and data that are necessary for the communication apparatus.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, with reference to various illustrative logical blocks (illustrative logical blocks) and steps (steps) described in embodiments disclosed in this specification, embodiments of this application can be implemented by electronic hardware, computer software, or a combination of the computer software and the electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division, and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or other forms.

The units described as separate parts may or may not be physically separate, and parts displayed as units may or may not be physical units, that is, may be located at one location, or may be distributed on a plurality of network units. Some or all of the units may be selected based on actual requirements to achieve the objectives of the solutions in embodiments.

When the functions are implemented in the form of a software functional unit and sold or used as an independent product, the functions may be stored in a computer-readable storage medium. Based on such an understanding, the technical solutions in this application essentially, the part that contributes, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (read-only memory, ROM), a RAM, a magnetic disk, or an optical disc.

## Claims

1. A communication method, comprising:
receiving first information, wherein the first information indicates a terminal device to report a measurement gap requirement, and the measurement gap requirement indicates whether a measurement gap is required;
receiving second information, wherein the second information is for enabling the terminal device to report a temporary capability by using a user equipment assistance information UAI message, and the temporary capability comprises the measurement gap requirement; and
when the terminal device has an expected/required measurement gap requirement, and the terminal device has not reported the measurement gap requirement, sending the first measurement gap requirement; or when a first measurement gap requirement is different from a last reported measurement gap requirement, sending the first measurement gap requirement, wherein the first measurement gap requirement is a current measurement gap requirement of the terminal device.

2. The method according to claim 1, wherein
the first information is carried in a radio resource control RRC reconfiguration message or an RRC resume message; and
the first measurement gap requirement is carried in an RRC reconfiguration complete message, an RRC resume complete message, or the UAI message.

3. The method according to claim 2, wherein the last reported measurement gap requirement is:
a last reported measurement gap requirement in measurement gap requirements in the RRC reconfiguration complete message, the RRC resume complete message, and the UAI message.

4. The method according to any one of claims 1 to 3, wherein the first information comprises filtering information, the filtering information indicates a target band for which the terminal device is requested to report the measurement gap requirement, the first measurement gap requirement is carried in the UAI message, and the first measurement gap requirement corresponds to the target band.

5. The method according to any one of claims 1 to 4, wherein after sending the first measurement gap requirement, the method further comprises:
starting a timer, wherein in a running process of the timer, the terminal device is prohibited from reporting the measurement gap requirement by using the UAI message.

6. A communication method, comprising:
receiving a first measurement gap requirement from a terminal device;
receiving a second measurement gap requirement from the terminal device, wherein the second measurement gap requirement is different from the first measurement gap requirement, the second measurement gap requirement is a last reported measurement gap requirement, and a message carrying the second measurement gap requirement is different from a message carrying the first measurement gap requirement; and
sending the second measurement gap requirement to a target network device.

7. The method according to claim 6, wherein the last reported measurement gap requirement is:
a last reported measurement gap requirement in measurement gap requirements in an RRC reconfiguration complete message, an RRC resume complete message, and a UAI message.

8. The method according to claim 6 or 7, wherein the second measurement gap requirement sent to the target network device is carried in a handover preparation information message, and the handover preparation information message comprises first indication information and second indication information; and
the first indication information indicates the second measurement gap requirement, the first indication information is measurement gap requirement information, and the second indication information is UAI.

9. A communication method, comprising:
determining third indication information, wherein the third indication information indicates that a capability of a terminal device is restricted; and
sending the third indication information to a first access network apparatus.

10. The method according to claim 9, wherein the first access network apparatus is a central unit CU.

11. The method according to claim 9 or 10, wherein the third indication information is carried in a radio resource control RRC setup complete message and/or an RRC resume complete message.

12. A communication method, applied to a first access network apparatus, wherein the method comprises:
receiving third indication information from a terminal device, wherein the third indication information indicates that a capability of the terminal device is restricted; and
sending fourth indication information to a second access network apparatus, wherein the fourth indication information indicates that the capability of the terminal device is restricted.

13. The method according to claim 12, wherein the first access network apparatus is a central unit CU, and the second access network apparatus is a distributed unit DU.

14. The method according to claim 12 or 13, wherein the third indication information is carried in a radio resource control RRC setup complete message and/or an RRC resume complete message.

15. The method according to any one of claims 12 to 14, wherein sending the fourth indication information to the second access network apparatus comprises:
sending a first message to the second access network apparatus, wherein the first message comprises the fourth indication information, to indicate that the capability of the terminal device is restricted.

16. A communication method, applied to a second access network apparatus, wherein the method comprises:
receiving fourth indication information sent by a first access network apparatus, wherein the fourth indication information indicates that a capability of a terminal device is restricted; and
scheduling the terminal device based on the fourth indication information.

17. The method according to claim 16, wherein receiving the fourth indication information sent by the first access network apparatus comprises:
receiving a first message sent by the first access network apparatus, wherein the first message comprises the fourth indication information, to indicate that the capability of the terminal device is restricted.

18. A communication apparatus, comprising a transceiver module and a processing module,
wherein
the transceiver module is configured to: receive first information, wherein the first information indicates the communication apparatus to report a measurement gap requirement, and the measurement gap requirement indicates whether a measurement gap is required; and receive second information, wherein the second information is for enabling the communication apparatus to report a temporary capability by using a user equipment assistance information UAI message, and the temporary capability comprises the measurement gap requirement;
the processing module is configured to: determine that the communication apparatus has an expected/required measurement gap requirement and that the communication apparatus has not reported the measurement gap requirement; or determine that a first measurement gap requirement is different from a last reported measurement gap requirement; and
the transceiver module is further configured to send the first measurement gap requirement, wherein the first measurement gap requirement is a current measurement gap requirement of the communication apparatus.

19. The apparatus according to claim 18, wherein
the first information is carried in a radio resource control RRC reconfiguration message or an RRC resume message; and
the first measurement gap requirement is carried in an RRC reconfiguration complete message, an RRC resume complete message, or the UAI message.

20. The apparatus according to claim 19, wherein the last reported measurement gap requirement is:
a last reported measurement gap requirement in measurement gap requirements in the RRC reconfiguration complete message and the UAI message; or
a last reported measurement gap requirement in measurement gap requirements in the RRC reconfiguration complete message, the RRC resume complete message, and the UAI message.

21. The apparatus according to any one of claims 18 to 20, wherein the first information comprises filtering information, the filtering information indicates a target band for which the communication apparatus is requested to report the measurement gap requirement, the first measurement gap requirement is carried in the UAI message, and the first measurement gap requirement corresponds to the target band.

22. The apparatus according to any one of claims 18 to 21, wherein after the first measurement gap requirement is sent, the processing module is further configured to start a timer, wherein in a running process of the timer, the communication apparatus is prohibited from reporting the measurement gap requirement by using the UAI message.

23. A communication apparatus, comprising:
the transceiver module, configured to: receive a first measurement gap requirement from a terminal device; receive a second measurement gap requirement from the terminal device; and send the second measurement gap requirement to a target network device, wherein the second measurement gap requirement is different from the first measurement gap requirement, the second measurement gap requirement is a last reported measurement gap requirement, and a message carrying the second measurement gap requirement is different from a message carrying the first measurement gap requirement; and
a processing module, configured to determine the message carrying the second measurement gap requirement.

24. The apparatus according to claim 23, wherein the last reported measurement gap requirement is:
a last reported measurement gap requirement in measurement gap requirements in a radio resource control RRC reconfiguration complete message and a user equipment assistance information UAI message; or
a last reported measurement gap requirement in measurement gap requirements in an RRC reconfiguration complete message, an RRC resume complete message, and a UAI message.

25. The apparatus according to claim 23 or 24, wherein the second measurement gap requirement sent to the target network device is carried in a handover preparation information message, and the handover preparation information message comprises first indication information and second indication information; and
the first indication information indicates the second measurement gap requirement, the first indication information is measurement gap requirement information, and the second indication information is UAI.

26. A communication apparatus, comprising:
a processing module, configured to determine third indication information, wherein the third indication information indicates that a capability of a terminal device is restricted; and
a transceiver module, used by a first access network apparatus to send the third indication information.

27. The apparatus according to claim 26, wherein the first access network apparatus is a central unit CU.

28. The apparatus according to claim 26 or 27, wherein the third indication information is carried in a radio resource control RRC setup complete message and/or an RRC resume complete message.

29. A communication apparatus, comprising:
a transceiver module, configured to: receive third indication information; and send fourth indication information to a second access network apparatus, wherein the third indication information indicates that a capability of a terminal device is restricted, and the fourth indication information indicates that the capability of the terminal device is restricted; and
a processing module, configured to determine the fourth indication information.

30. The apparatus according to claim 29, wherein the communication apparatus is a central unit CU, and the second access network apparatus is a distributed unit DU.

31. The apparatus according to claim 29 or 30, wherein the third indication information is carried in a radio resource control RRC setup complete message and/or an RRC resume complete message.

32. The apparatus according to any one of claims 29 to 31, wherein the transceiver module is specifically configured to:
send a first message to the second access network apparatus, wherein the first message comprises the fourth indication information, to indicate that the capability of the terminal device is restricted.

33. A communication apparatus, comprising:
a transceiver module, configured to receive fourth indication information sent by a first access network apparatus, wherein the fourth indication information indicates that a capability of a terminal device is restricted; and
a processing module, configured to schedule the terminal device based on the fourth indication information.

34. The apparatus according to claim 33, wherein the transceiver module is specifically configured to:
receive a first message sent by the first access network apparatus, wherein the first message comprises the fourth indication information, to indicate that the capability of the terminal device is restricted.

35. A communication apparatus, comprising a processor, wherein the processor is configured to execute one or more computer programs or instructions, to enable the communication apparatus to perform the method according to any one of claims 1 to 5, enable the communication apparatus to perform the method according to any one of claims 6 to 8, enable the communication apparatus to perform the method according to any one of claims 9 to 11, enable the communication apparatus to perform the method according to any one of claims 12 to 15, or enable the communication apparatus to perform the method according to claim 16 or 17.

36. A communication system, wherein the communication system comprises a network device and a terminal device, and the terminal device is configured to implement the method according to any one of claims 1 to 5; or
the communication system comprises a terminal device, a source network device, and a target network device, and the source network device is configured to implement the method according to any one of claims 6 to 8.

37. A computer-readable storage medium, storing a computer program or instructions, wherein the computer program or the instructions are for implementing the method according to any one of claims 1 to 5, for implementing the method according to any one of claims 6 to 8, for implementing the method according to any one of claims 9 to 11, for implementing the method according to any one of claims 12 to 15, or for implementing the method according to claim 16 or 17.

38. A computer program product, wherein the computer program product comprises a computer program; and when the computer program is run on a computer, the computer is enabled to perform the method according to any one of claims 1 to 5, perform the method according to any one of claims 6 to 8, perform the method according to any one of claims 9 to 11, perform the method according to any one of claims 12 to 15, or perform the method according to claim 16 or 17.
